# EUROPEAN PATENT APPLICATION

(11) **EP 4 804 625 A1**
(43) Date of publication of application: **09.09.2026**
(21) Application number: 24886257.5
(22) Date of filing: 30.10.2024
(51) Int. Cl.: H04W 36/36, H04W 36/00, H04W 36/38, H04W 52/02, H04W 76/28

(54) **METHOD BY USER EQUIPMENT, APPARATUS, STORAGE MEDIUM, METHOD BY BASE STATION, AND BASE STATION**

(30) Priority: 01.11.2023 KR 20230149428
(71) Applicant: LG Electronics Inc., Yeongdeungpo-gu Seoul 07336 (KR)
(72) Inventor: MYUNG, Sechang, Seoul 06772 (KR); YANG, Suckchel, Seoul 06772 (KR); KIM, Seonwook, Seoul 06772 (KR); LEE, Youngdae, Seoul 06772 (KR)
(74) Representative: Mooser, Sebastian Thomas
(86) International application number: PCT/KR2024/016823
(87) International publication number: WO 2025/095585

(57) **Abstract**

A UE may: receive a first parameter regarding a start bit position of a specific DCI format for a serving cell: detect the specific DCI format; and if i) a second parameter regarding a CHO-related bit is configured and ii) the serving cell is a primary cell (PCell) for the UE, determine whether or not to trigger a CHO procedure including evaluating a CHO condition, on the basis of a CHO-related field within an information block for the serving cell within the specific DCI format.

## Description

### TECHNICAL FIELD

The present disclosure relates to a wireless communication system.

### BACKGROUND

A variety of technologies, such as machine-to-machine (M2M) communication, machine type communication (MTC), and a variety of devices demanding high data throughput, such as smartphones and tablet personal computers (PCs), have emerged and spread. Accordingly, the volume of data throughput demanded to be processed in a cellular network has rapidly increased. In order to satisfy such rapidly increasing data throughput, carrier aggregation technology or cognitive radio technology for efficiently employing more frequency bands and multiple input multiple output (MIMO) technology or multi-base station (BS) cooperation technology for raising data capacity transmitted on limited frequency resources have been developed.

As more and more communication devices have required greater communication capacity, there has been a need for enhanced mobile broadband (eMBB) communication relative to legacy radio access technology (RAT). In addition, massive machine type communication (mMTC) for providing various services at anytime and anywhere by connecting a plurality of devices and objects to each other is one main issue to be considered in next-generation communication.

Communication system design considering services/user equipment (UEs) sensitive to reliability and latency is also under discussion. The introduction of next-generation RAT is being discussed in consideration of eMBB communication, mMTC, ultra-reliable and low-latency communication (URLLC), and the like.

As the number of services/user equipments (UEs) that a network needs to support increases rapidly, the needs for not only power saving for UEs but also energy saving for the network are gradually increasing.

### DISCLOSURE

### Technical Problem

One object of the present disclosure is to provide methods and procedures for network energy conservation.

Another object of the present disclosure is to provide methods and procedures for efficiently triggering a handover-related procedure.

The objects to be achieved with the present disclosure are not limited to what has been particularly described hereinabove and other objects not described herein will be more clearly understood by persons skilled in the art from the following detailed description.

### Technical Solution

In an aspect of the present disclosure, a method performed by a user equipment (UE) is provided.

In another aspect of the present disclosure, an apparatus is provided. The apparatus includes at least one processor, and at least one computer memory operably connectable to the at least one processor and storing instructions that, when executed, cause the at least one processor to perform operations for a UE.

In another aspect of the present disclosure, a non-transitory computer-readable storage medium is provided. The storage medium stores at least one program code including instructions that, when executed, cause at least one processor to perform operations for a UE.

The method performed by the UE or the operations for the UE may include: receiving a first parameter for a starting bit position of a specific downlink control information (DCI) format for a serving cell; detecting the specific DCI format; and based on i) a second parameter for a conditional handover (CHO)-related bit being configured and ii) the serving cell being a primary cell (PCell) of the UE, determining whether to trigger a CHO procedure including evaluating a CHO condition, based on a CHO-related field included in an information block for the serving cell within the specific DCI format.

In another aspect of the present disclosure, a method performed by a base station (BS) is provided.

In another aspect of the present disclosure, a BS is provided. The BS includes at least one processor, and at least one computer memory operably connectable to the at least one processor and storing instructions that, when executed, cause the at least one processor to perform operations for the BS.

The method performed by the BS or the operations for the BS may include: transmitting a first parameter for a starting bit position of a specific DCI format for a serving cell of a UE; and transmitting the specific DCI format. Based on i) a second parameter for a CHO-related bit being configured and ii) the serving cell being a primary cell (PCell) of the UE, an information block for the serving cell within the specific DCI format may include a CHO-related field.

In each aspect of the present disclosure, based on i) the second parameter being configured and ii) the serving cell being the PCell of the UE, the CHO-related field may be a last 1 bit of the information block.

In each aspect of the present disclosure, based on i) the second parameter being configured, ii) the serving cell being the PCell of the UE, and ii) both cell discontinuous transmission (DTX) and cell discontinuous reception (DRX) being configured for the serving cell, the information block may include 3 bits, and first 2 bits of the information block may be used for activation or deactivation of at least one of the cell DTX or the cell DRX.

In each aspect of the present disclosure, based on i) the second parameter being configured, ii) the serving cell being the PCell of the UE, and ii) cell DTX or cell DRX being configured for the serving cell, the information block may include 2 bits, and a first bit of the information block may be used for activation or deactivation of the cell DTX or the cell DRX configured for the serving cell.

In each aspect of the present disclosure, the specific DCI format may be DCI format 2_9.

In each aspect of the present disclosure, the method performed by the UE or the operations for the UE may include monitoring the specific DCI format in a common search space.

In each aspect of the present disclosure, the specific DCI format may be transmitted in a common search space.

In each aspect of the present disclosure, the method performed by the UE or the operations for the UE may include, based on the CHO-related field including a first value and the CHO condition being satisfied, executing handover to another cell.

In each aspect of the present disclosure, based on the CHO-related field including a second value, the CHO procedure may not be triggered.

In each aspect of the present disclosure, the method performed by the UE or the operations for the UE may include, based on i) the second parameter not being configured or ii) the serving cell being a secondary cell of the UE, not obtaining the CHO-related field from the information block.

In each aspect of the present disclosure, the method performed by the UE or the operations for the UE may include, based on i) the second parameter not being configured or ii) the serving cell being a secondary cell of the UE, considering that the information block does not include the CHO-related field.

In each aspect of the present disclosure, based on i) the second parameter not being configured or ii) the serving cell not being a PCell for any UE, the information block may not include the CHO-related field.

In each aspect of the present disclosure, the method performed by the UE or the operations for the UE may further include receiving a configuration for the CHO condition.

In each aspect of the present disclosure, the method performed by the BS or the operations for the BS may further include transmitting a configuration for the CHO condition.

The foregoing solutions are merely a part of the examples of the present disclosure and various examples into which the technical features of the present disclosure are incorporated may be derived and understood by persons skilled in the art from the following detailed description.

### Advantageous Effects

According to implementations of the present disclosure, energy saving methods and procedures for a network, base station (BS), and/or user equipment (UE) may be provided.

According to implementations of the present disclosure, a handover-related procedure may be efficiently triggered.

According to implementations of the present disclosure, the power consumption of a UE may be reduced.

The effects according to the present disclosure are not limited to what has been particularly described hereinabove and other effects not described herein will be more clearly understood by persons skilled in the art related to the present disclosure from the following detailed description.

### BRIEF DESCRIPTION OF THE DRAWINGS

The accompanying drawings, which are included to provide a further understanding of the present disclosure, illustrate examples of implementations of the present disclosure and together with the detailed description serve to explain implementations of the present disclosure:
FIG. 1 illustrates an example of a communication system 1 to which implementations of the present disclosure are applied;
FIG. 2 is a block diagram illustrating examples of communication devices capable of performing a method according to the present disclosure;
FIG. 3 illustrates another example of a wireless device capable of performing implementation(s) of the present disclosure;
FIG. 4 illustrates an example of a frame structure used in a 3rd generation partnership project (3GPP)-based wireless communication system;
FIG. 5 illustrates a resource grid of a slot;
FIG. 6 illustrates a discontinuous reception (DRX) operation applicable to implementation(s) of the present disclosure;
FIG. 7 illustrates a case in which a long DRX cycle and a short DRX cycle are configured;
FIG. 8 illustrates a structure of a downlink control information (DCI) format for activating/deactivating a cell discontinuous transmission/discontinuous reception (DTX/DRX) configuration;
FIGS. 9 and 10 illustrate structures of DCI format 2_9 according to some implementations of the present disclosure;
FIG. 11 is a flowchart illustrating a user equipment (UE) operation according to some implementations of the present disclosure; and
FIG. 12 is a flowchart illustrating a base station (BS) operation according to some implementations of the present disclosure.

### DETAILED DESCRIPTION

Hereinafter, implementations according to the present disclosure will be described in detail with reference to the accompanying drawings. The detailed description, which will be given below with reference to the accompanying drawings, is intended to explain exemplary implementations of the present disclosure, rather than to show the only implementations that may be implemented according to the present disclosure. The following detailed description includes specific details in order to provide a thorough understanding of the present disclosure. However, it will be apparent to those skilled in the art that the present disclosure may be practiced without such specific details.

In some instances, known structures and devices may be omitted or may be shown in block diagram form, focusing on important features of the structures and devices, so as not to obscure the concept of the present disclosure. The same reference numbers will be used throughout the present disclosure to refer to the same or like parts.

A technique, a device, and a system described below may be applied to a variety of wireless multiple access systems. The multiple access systems may include, for example, a code division multiple access (CDMA) system, a frequency division multiple access (FDMA) system, a time division multiple access (TDMA) system, an orthogonal frequency division multiple access (OFDMA) system, a single-carrier frequency division multiple access (SC-FDMA) system, a multi-carrier frequency division multiple access (MC-FDMA) system, etc. CDMA may be implemented by radio technology such as universal terrestrial radio access (UTRA) or CDMA2000. TDMA may be implemented by radio technology such as global system for mobile communications (GSM), general packet radio service (GPRS), enhanced data rates for GSM evolution (EDGE) (i.e., GERAN), etc. OFDMA may be implemented by radio technology such as institute of electrical and electronics engineers (IEEE) 802.11 (Wi-Fi), IEEE 802.16 (WiMAX), IEEE 802.20, evolved-UTRA (E-UTRA), etc. UTRA is part of universal mobile telecommunications system (UMTS) and 3rd generation partnership project (3GPP) long-term evolution (LTE) is part of E-UMTS using E-UTRA. 3GPP LTE adopts OFDMA on downlink (DL) and adopts SC-FDMA on uplink (UL). LTE-advanced (LTE-A) is an evolved version of 3GPP LTE.

For convenience of description, description will be given under the assumption that the present disclosure is applied to LTE and/or new RAT (NR). However, the technical features of the present disclosure are not limited thereto. For example, although the following detailed description is given based on mobile communication systems corresponding to 3GPP LTE/NR systems, the mobile communication systems are applicable to other arbitrary mobile communication systems except for matters that are specific to the 3GPP LTE/NR system.

For terms and techniques that are not described in detail among terms and techniques used in the present disclosure, reference may be made to 3GPP based standard specifications, for example, 3GPP TS 36.211, 3GPP TS 36.212, 3GPP TS 36.213, 3GPP TS 36.321, 3GPP TS 36.300, 3GPP TS 36.331, 3GPP TS 37.213, 3GPP TS 38.211, 3GPP TS 38.212, 3GPP TS 38.213, 3GPP TS 38.214, 3GPP TS 38.300, 3GPP TS 38.304, 3GPP TS 38.331, etc.

In examples of the present disclosure described later, if a device "assumes" something, this may mean that a channel transmission entity transmits a channel in compliance with the corresponding "assumption". This also may mean that a channel reception entity receives or decodes the channel in the form of conforming to the "assumption" on the premise that the channel has been transmitted in compliance with the "assumption".

In the present disclosure, '/' may mean 'and/or'. For example, cell DTX/DRX may mean cell DTX and/or cell DRX.

In the present disclosure, a user equipment (UE) may be fixed or mobile. Each of various devices that transmit and/or receive user data and/or control information by communicating with a base station (BS) may be the UE. The term UE may be referred to as terminal equipment, mobile station (MS), mobile terminal (MT), user terminal (UT), subscriber station (SS), wireless device, personal digital assistant (PDA), wireless modem, handheld device, etc. In the present disclosure, a BS refers to a fixed station that communicates with a UE and/or another BS and exchanges data and control information with a UE and another BS. The term BS may be referred to as advanced base station (ABS), Node-B (NB), evolved Node-B (eNB), base transceiver system (BTS), access point (AP), processing server (PS), etc. Particularly, a BS of a universal terrestrial radio access (UTRAN) is referred to as an NB, a BS of an evolved-UTRAN (E-UTRAN) is referred to as an eNB, and a BS of new radio access technology network is referred to as a gNB. Hereinbelow, for convenience of description, the NB, eNB, or gNB will be referred to as a BS regardless of the type or version of communication technology.

In the present disclosure, a node refers to a fixed point capable of transmitting/receiving a radio signal to/from a UE by communication with the UE. Various types of BSs may be used as nodes regardless of the names thereof. For example, a BS, NB, eNB, pico-cell eNB (PeNB), home eNB (HeNB), relay, repeater, etc. may be a node. Furthermore, a node may not be a BS. For example, a radio remote head (RRH) or a radio remote unit (RRU) may be a node. Generally, the RRH and RRU have power levels lower than that of the BS. Since the RRH or RRU (hereinafter, RRH/RRU) is connected to the BS through a dedicated line such as an optical cable in general, cooperative communication according to the RRH/RRU and the BS may be smoothly performed relative to cooperative communication according to BSs connected through a wireless link. At least one antenna is installed per node. An antenna may refer to a physical antenna port or refer to a virtual antenna or an antenna group. The node may also be called a point.

In the present disclosure, a cell refers to a specific geographical area in which one or more nodes provide communication services. Accordingly, in the present disclosure, communication with a specific cell may mean communication with a BS or a node providing communication services to the specific cell. A DL/UL signal of the specific cell refers to a DL/UL signal from/to the BS or the node providing communication services to the specific cell. A cell providing UL/DL communication services to a UE is especially called a serving cell. Furthermore, channel status/quality of the specific cell refers to channel status/quality of a channel or a communication link generated between the BS or the node providing communication services to the specific cell and the UE. In 3GPP-based communication systems, the UE may measure a DL channel state from a specific node using cell-specific reference signal(s) (CRS(s)) transmitted on a CRS resource and/or channel state information reference signal(s) (CSI-RS(s)) transmitted on a CSI-RS resource, allocated to the specific node by antenna port(s) of the specific node.

A 3GPP-based communication system uses the concept of a cell in order to manage radio resources, and a cell related with the radio resources is distinguished from a cell of a geographic area.

The "cell" of the geographic area may be understood as coverage within which a node may provide services using a carrier, and the "cell" of the radio resources is associated with bandwidth (BW), which is a frequency range configured by the carrier. Since DL coverage, which is a range within which the node is capable of transmitting a valid signal, and UL coverage, which is a range within which the node is capable of receiving the valid signal from the UE, depend upon a carrier carrying the signal, coverage of the node may also be associated with coverage of the "cell" of radio resources used by the node. Accordingly, the term "cell" may be used to indicate service coverage by the node sometimes, radio resources at other times, or a range that a signal using the radio resources may reach with valid strength at other times.

In 3GPP communication standards, the concept of the cell is used in order to manage radio resources. The "cell" associated with the radio resources is defined by a combination of DL resources and UL resources, that is, a combination of a DL component carrier (CC) and a UL CC. The cell may be configured by the DL resources only or by the combination of the DL resources and the UL resources. If carrier aggregation is supported, linkage between a carrier frequency of the DL resources (or DL CC) and a carrier frequency of the UL resources (or UL CC) may be indicated by system information. For example, the combination of the DL resources and the UL resources may be indicated by system information block type 2 (SIB2) linkage. In this case, the carrier frequency may be equal to or different from a center frequency of each cell or CC. When carrier aggregation (CA) is configured, the UE has only one radio resource control (RRC) connection with a network. During RRC connection establishment/re-establishment/handover, one serving cell provides non-access stratum (NAS) mobility information. During RRC connection re-establishment/handover, one serving cell provides security input. This cell is referred to as a primary cell (Pcell). The Pcell refers to a cell operating on a primary frequency on which the UE performs an initial connection establishment procedure or initiates a connection re-establishment procedure. According to UE capability, secondary cells (Scells) may be configured to form a set of serving cells together with the Pcell. The Scell may be configured after completion of RRC connection establishment and used to provide additional radio resources in addition to resources of a specific cell (SpCell). A carrier corresponding to the Pcell on DL is referred to as a downlink primary CC (DL PCC), and a carrier corresponding to the Pcell on UL is referred to as an uplink primary CC (UL PCC). A carrier corresponding to the Scell on DL is referred to as a downlink secondary CC (DL SCC), and a carrier corresponding to the Scell on UL is referred to as an uplink secondary CC (UL SCC).

In a dual connectivity (DC) operation, the term special cell (SpCell) refers to a Pcell of a master cell group (MCG) or a primary secondary cell (PSCell) of a secondary cell group (SCG). The SpCell supports PUCCH transmission and contention-based random access and is always activated. The MCG is a group of service cells associated with a master node (e.g., BS) and includes the SpCell (Pcell) and optionally one or more Scells. For a UE configured with DC, the SCG is a subset of serving cells associated with a secondary node and includes the PSCell and 0 or more Scells. The PSCell is a primary Scell of the SCG. For a UE in RRC_CONNECTED state, which is not configured with CA or DC, only one serving cell including only the Pcell is present. For a UE in RRC_CONNECTED state, which is configured with CA or DC, the term serving cells refers to a set of cells including SpCell(s) and all Scell(s). In DC, two medium access control (MAC) entities, i.e., one MAC entity for the MCG and one MAC entity for the SCG, are configured for the UE.

For a UE that is configured with CA and is not configured with DC, a Pcell PUCCH group (also called a primary PUCCH group) including the Pcell and 0 or more Scells and an Scell PUCCH group (also called a secondary PUCCH group) including only Scell(s) may be configured. For the Scell, an Scell on which a PUCCH associated with the corresponding cell is transmitted (hereinafter, a PUCCH Scell) may be configured. An Scell for which a PUCCH Scell is indicated belongs to the Scell PUCCH group (i.e., the secondary PUCCH group) and PUCCH transmission of related uplink control information (UCI) is performed on the PUCCH Scell. If a PUCCH Scell is not indicated for an Scell or a cell which is indicated for PUCCH transmission for the Scell is a Pcell, the Scell belongs to the Pcell PUCCH group (i.e., the primary PUCCH group) and PUCCH transmission of related UCI is performed on the Pcell. Hereinbelow, if the UE is configured with the SCG and some implementations of the present disclosure related to a PUCCH are applied to the SCG, the primary cell may refer to the PSCell of the SCG. If the UE is configured with the PUCCH Scell and some implementations of the present disclosure related to the PUCCH are applied to the secondary PUCCH group, the primary cell may refer to the PUCCH Scell of the secondary PUCCH group.

In a wireless communication system, the UE receives information on DL from the BS and the UE transmits information on UL to the BS. The information that the BS and UE transmit and/or receive includes data and a variety of control information and there are various physical channels according to types/usage of the information that the UE and the BS transmit and/or receive.

The 3GPP-based communication standards define DL physical channels corresponding to resource elements carrying information originating from a higher layer and DL physical signals corresponding to resource elements which are used by the physical layer but do not carry the information originating from the higher layer. For example, a physical downlink shared channel (PDSCH), a physical broadcast channel (PBCH), a physical multicast channel (PMCH), a physical control format indicator channel (PCFICH), a physical downlink control channel (PDCCH), etc. are defined as the DL physical channels, and a reference signal (RS) and a synchronization signal are defined as the DL physical signals. The RS, which is also referred to as a pilot, represents a signal with a predefined special waveform known to both the BS and the UE. For example, a demodulation reference signal (DMRS), a channel state information RS (CSI-RS), a positioning reference signal (PRS) and etc. are defined as DL RSs. The 3GPP-based communication standards define UL physical channels corresponding to resource elements carrying information originating from the higher layer and UL physical signals corresponding to resource elements which are used by the physical layer but do not carry the information originating from the higher layer. For example, a physical uplink shared channel (PUSCH), a physical uplink control channel (PUCCH), and a physical random access channel (PRACH) are defined as the UL physical channels, and a DMRS for a UL control/data signal, a sounding reference signal (SRS) used for UL channel measurement, etc. are defined.

In the present disclosure, a PDCCH refers to a set of time-frequency resources (e.g., resource elements (REs)) carrying downlink control information (DCI), and a PDSCH refers to a set of time-frequency resources carrying DL data. A PUCCH, a PUSCH, and a PRACH refer to a set of time-frequency resources carrying UCI, a set of time-frequency resources carrying UL data, and a set of time-frequency resources carrying random access signals, respectively. In the following description, "the UE transmits/receives a PUCCH/PUSCH/PRACH" is used as the same meaning that the UE transmits/receives the UCI/UL data/random access signals on or through the PUCCH/PUSCH/PRACH, respectively. In addition, "the BS transmits/receives a PBCH/PDCCH/PDSCH" is used as the same meaning that the BS transmits the broadcast information/DCI/DL data on or through a PBCH/PDCCH/PDSCH, respectively.

In this specification, a radio resource (e.g., a time-frequency resource) scheduled or configured to the UE by the BS for transmission or reception of the PUCCH/PUSCH/PDSCH may be referred to as a PUCCH/PUSCH/PDSCH resource.

Since a communication device receives a synchronization signal (SS), DMRS, CSI-RS, PRS, PBCH, PDCCH, PDSCH, PUSCH, and/or PUCCH in the form of radio signals on a cell, the communication device may not select and receive radio signals including only a specific physical channel or a specific physical signal through a radio frequency (RF) receiver, or may not select and receive radio signals without a specific physical channel or a specific physical signal through the RF receiver. In actual operations, the communication device receives radio signals on the cell via the RF receiver, converts the radio signals, which are RF band signals, into baseband signals, and then decodes physical signals and/or physical channels in the baseband signals using one or more processors. Thus, in some implementations of the present disclosure, not receiving physical signals and/or physical channels may mean that a communication device does not attempt to restore the physical signals and/or physical channels from radio signals, for example, does not attempt to decode the physical signals and/or physical channels, rather than that the communication device does not actually receive the radio signals including the corresponding physical signals and/or physical channels.

As more and more communication devices have required greater communication capacity, there has been a need for eMBB communication relative to legacy radio access technology (RAT). In addition, massive MTC for providing various services at anytime and anywhere by connecting a plurality of devices and objects to each other is one main issue to be considered in next-generation communication. Further, communication system design considering services/UEs sensitive to reliability and latency is also under discussion. The introduction of next-generation RAT is being discussed in consideration of eMBB communication, massive MTC, ultra-reliable and low-latency communication (URLLC), and the like. Currently, in 3GPP, a study on the next-generation mobile communication systems after EPC is being conducted. In the present disclosure, for convenience, the corresponding technology is referred to a new RAT (NR) or fifth-generation (5G) RAT, and a system using NR or supporting NR is referred to as an NR system.

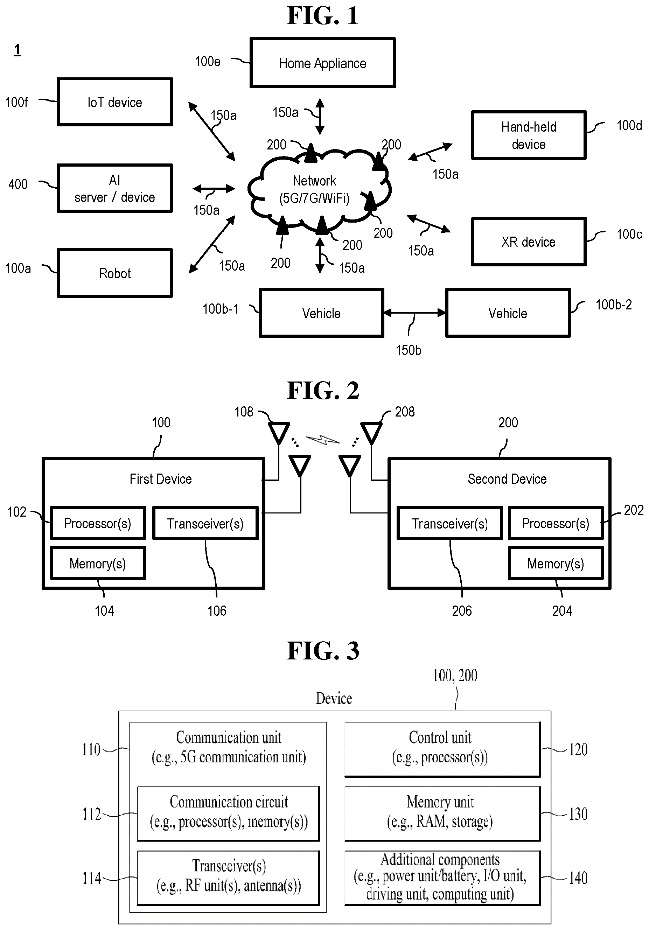

FIG. 1 illustrates an example of a communication system 1 to which implementations of the present disclosure are applied. Referring to FIG. 1, the communication system 1 applied to the present disclosure includes wireless devices, BSs, and a network. Here, the wireless devices represent devices performing communication using RAT (e.g., 5G NR or LTE (e.g., E-UTRA)) and may be referred to as communication/radio/5G devices. The wireless devices may include, without being limited to, a robot 100a, vehicles 100b-1 and 100b-2, an extended reality (XR) device 100c, a hand-held device 100d, a home appliance 100e, an Internet of Things (IoT) device 100f, and an artificial intelligence (AI) device/server 400. For example, the vehicles may include a vehicle having a wireless communication function, an autonomous driving vehicle, and a vehicle capable of performing vehicle-to-vehicle communication. Here, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may also be implemented as wireless devices and a specific wireless may operate as a BS/network node with respect to another wireless device.

The wireless devices 100a to 100f may be connected to a network 300 via BSs 200. AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., vehicle-to-vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a and 150b may be established between the wireless devices 100a to 100f and the BSs 200 and between the wireless devices 100a to 100f). Here, the wireless communication/connections such as UL/DL communication 150a and sidelink communication 150b (or, device-to-device (D2D) communication) may be established by various RATs (e.g., 5G NR). The wireless devices and the BSs/wireless devices may transmit/receive radio signals to/from each other through the wireless communication/connections 150a and 150b. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 2 is a block diagram illustrating examples of communication devices capable of performing a method according to the present disclosure. Referring to FIG. 2, a first wireless device 100 and a second wireless device 200 may transmit and/or receive radio signals through a variety of RATs (e.g., LTE and NR). Here, {the first wireless device 100 and the second wireless device 200} may correspond to {the wireless device 100x and the BS 200} and/or {the wireless device 100x and the wireless device 100x} of FIG. 1.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the below-described /proposed functions, procedures, and/or methods. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver(s) 106 and then store information obtained by processing the second information/signals in the memory(s) 104. The memory(s) 104 may be connected to the processor(s) 102 and may store a variety of information related to operations of the processor(s) 102. For example, the memory(s) 104 may perform a part or all of processes controlled by the processor(s) 102 or store software code including instructions for performing the below-described/proposed procedures and/or methods. Here, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 is used interchangeably with radio frequency (RF) unit(s). In the present disclosure, the wireless device may represent the communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the below-described/proposed functions, procedures, and/or methods. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may perform a part or all of processes controlled by the processor(s) 202 or store software code including instructions for performing the below-described/proposed procedures and/or methods. Here, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 is used interchangeably with RF unit(s). In the present disclosure, the wireless device may represent the communication modem/circuit/chip.

The wireless communication technology implemented in the wireless devices 100 and 200 of the present disclosure may include narrowband Internet of things for low-power communication as well as LTE, NR, and 6G. For example, the NB-IoT technology may be an example of low-power wide-area network (LPWAN) technologies and implemented in standards such as LTE Cat NB1 and/or LTE Cat NB2. However, the NB-IoT technology is not limited to the above names. Additionally or alternatively, the wireless communication technology implemented in the wireless devices XXX and YYY of the present disclosure may perform communication based on the LTE-M technology. For example, the LTE-M technology may be an example of LPWAN technologies and called by various names including enhanced machine type communication (eMTC). For example, the LTE-M technology may be implemented in at least one of the following various standards: 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, etc., but the LTE-M technology is not limited to the above names. Additionally or alternatively, the wireless communication technology implemented in the wireless devices XXX and YYY of the present disclosure may include at least one of ZigBee, Bluetooth, and LPWAN in consideration of low-power communication, but the wireless communication technology is not limited to the above names. For example, the ZigBee technology may create a personal area network (PAN) related to small/low-power digital communication based on various standards such as IEEE 802.15.4 and so on, and the ZigBee technology may be called by various names.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as a physical (PHY) layer, medium access control (MAC) layer, a radio link control (RLC) layer, a packet data convergence protocol (PDCP) layer, radio resource control (RRC) layer, and a service data adaptation protocol (SDAP) layer). The one or more processors 102 and 202 may generate one or more protocol data units (PDUs) and/or one or more service data units (SDUs) according to the functions, procedures, proposals, and/or methods disclosed in the present disclosure. The one or more processors 102 and 202 may generate messages, control information, data, or information according to the functions, procedures, proposals, and/or methods disclosed in the present disclosure. The one or more processors 102 and 202 may generate signals (e.g., baseband signals) including PDUs, SDUs, messages, control information, data, or information according to the functions, procedures, proposals, and/or methods disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the functions, procedures, proposals, and/or methods disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The functions, procedures, proposals, and/or methods disclosed in the present disclosure may be implemented using firmware or software, and the firmware or software may be configured to include the modules, procedures, or functions. Firmware or software configured to perform the functions, procedures, proposals, and/or methods disclosed in the present disclosure may be included in the one or more processors 102 and 202 or stored in the one or more memories 104 and 204 so as to be driven by the one or more processors 102 and 202. The functions, procedures, proposals, and/or methods disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, commands, and/or instructions. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of the present disclosure, to one or more other devices. The one or more transceivers 106 and 206 may receive user data, control information, and/or radio signals/channels, mentioned in the functions, procedures, proposals, methods, and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208. The one or more transceivers 106 and 206 may be configured to transmit and receive user data, control information, and/or radio signals/channels, mentioned in the functions, procedures, proposals, methods, and/or operational flowcharts disclosed in the present disclosure, through the one or more antennas 108 and 208. In the present disclosure, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 3 illustrates another example of a wireless device capable of performing implementation(s) of the present disclosure. Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 2. For example, the transceiver(s) 114 may include the one or more transceivers 106 and 206 and/or the one or more antennas 108 and 208 of FIG. 2. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast UE, a hologram device, a public safety device, an MTC device, a medicine device, a fintech device (or a finance device), a security device, a climate/environment device, the AI server/device (400 of FIG. 1), the BS (200 of FIG. 1), a network node, etc. The wireless device may be used in a mobile or fixed place according to a use-case/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an electronic control unit (ECU), a graphical processing unit, and a memory control processor. As another example, the memory 130 may be configured by a random access memory (RAM), a dynamic RAM (DRAM), a read-only memory (ROM)), a flash memory, a volatile memory, a non- volatile memory, a transitory memory, a non-transitory memory and/or a combination thereof.

In the present disclosure, the at least one memory (e.g., 104 or 204) may store instructions or programs, and the instructions or programs may cause, when executed, at least one processor operably connected to the at least one memory to perform operations according to some embodiments or implementations of the present disclosure.

In the present disclosure, a computer readable (non-volatile or non-transitory) storage medium may store at least one instruction or program, and the at least one instruction or program may cause, when executed by at least one processor, the at least one processor to perform operations according to some embodiments or implementations of the present disclosure.

In the present disclosure, a processing device or apparatus may include at least one processor, and at least one computer memory operably connected to the at least one processor. The at least one computer memory may store instructions or programs, and the instructions or programs may cause, when executed, the at least one processor operably connected to the at least one memory to perform operations according to some embodiments or implementations of the present disclosure.

In the present disclosure, a computer program may include program code stored on at least one computer-readable (non-volatile) storage medium and, when executed, configured to perform operations according to some implementations of the present disclosure or cause at least one processor to perform the operations according to some implementations of the present disclosure. The computer program may be provided in the form of a computer program product. The computer program product may include at least one computer-readable (non-volatile) storage medium.

A communication device of the present disclosure includes at least one processor; and at least one computer memory operably connected to the at least one processor and configured to store instructions for causing, when executed, the at least one processor to perform operations according to example(s) of the present disclosure described later.

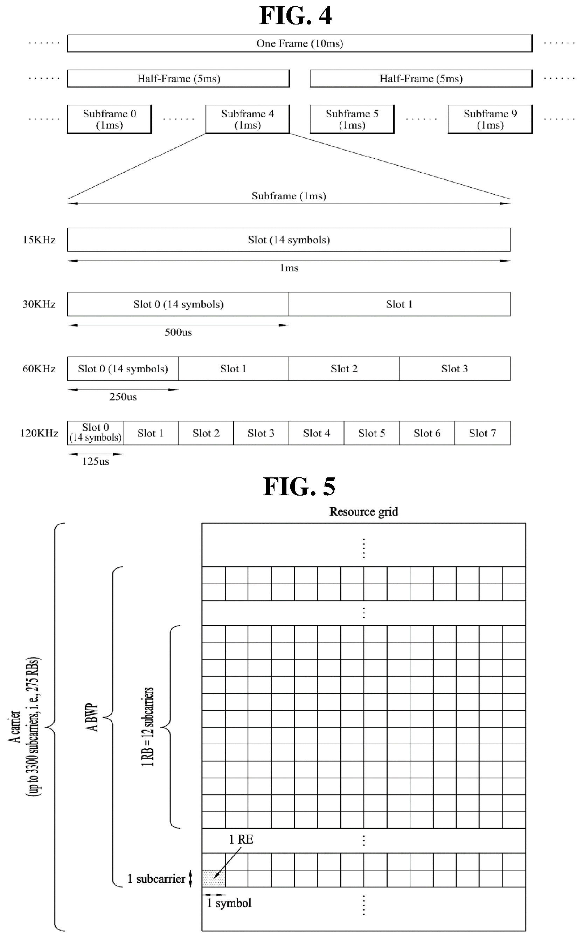

FIG. 4 illustrates an example of a frame structure used in a 3GPP-based wireless communication system.

The frame structure of FIG. 4 is purely exemplary and the number of subframes, the number of slots, and the number of symbols, in a frame, may be variously changed. In an NR system, different OFDM numerologies (e.g., subcarrier spacings (SCSs)) may be configured for multiple cells which are aggregated for one UE. Accordingly, the (absolute time) duration of a time resource including the same number of symbols (e.g., a subframe, a slot, or a transmission time interval (TTI)) may be differently configured for the aggregated cells. Here, the symbol may include an OFDM symbol (or cyclic prefix - OFDM (CP-OFDM) symbol) and an SC-FDMA symbol (or discrete Fourier transform-spread-OFDM (DFT-s-OFDM) symbol). In the present disclosure, the symbol, the OFDM-based symbol, the OFDM symbol, the CP-OFDM symbol, and the DFT-s-OFDM symbol are used interchangeably.

Referring to FIG. 4, in the NR system, UL and DL transmissions are organized into frames. Each frame has a duration of T_{f} = (△fₘₐₓ*N_{f}/100)*T_{c} = 10 ms and is divided into two half-frames of 5 ms each. A basic time unit for NR is T_{c} = 1/(△fₘₐₓ*N_{f}) where △fₘₐₓ = 480*10³ Hz and N_{f}= 4096. For reference, a basic time unit for LTE is Tₛ = 1/(△f_{ref}*N_{f,ref}) where △f_{ref} = 15*10³ Hz and N_{f,ref}= 2048. Tₛ and T_{c} have the relationship of a constant κ = Tₛ/T_{c} = 64. Each half-frame includes 5 subframes and a duration T_{sf} of a single subframe is 1 ms. Subframes are further divided into slots and the number of slots in a subframe depends on a subcarrier spacing. Each slot includes 14 or 12 OFDM symbols based on a cyclic prefix. In a normal CP, each slot includes 14 OFDM symbols and, in an extended CP, each slot includes 12 OFDM symbols. The numerology depends on an exponentially scalable subcarrier spacing △f = 2^{u}*15 kHz. The table below shows the number of OFDM symbols (*N*^{slot}_{symb}) per slot, the number of slots (*N*^{frame,u}ₛₗₒₜ) per frame, and the number of slots (*N*^{subframe,u}ₛₗₒₜ) per subframe.

**Table 1**

| *u* | *N*^{slot}_{symb} | *N*^{frame,u}ₛₗₒₜ | *N*^{subframe,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

The table below shows the number of OFDM symbols per slot, the number of slots per frame, and the number of slots per subframe, according to the subcarrier spacing △f = 2^{u}*15 kHz.

**Table 2**

| *u* | *N*^{slot}_{symb} | *N*^{frame,u}ₛₗₒₜ | *N*^{subframe,u}ₛₗₒₜ |
|---|---|---|---|
| 2 | 12 | 40 | 4 |

For a subcarrier spacing configuration u, slots may be indexed within a subframe in ascending order as follows: n^{u}ₛ ∈ {0, ..., n^{subframe,u}ₛₗₒₜ - 1} and indexed within a frame in ascending order as follows: n^{u}_{s,f} ∈ {0, ..., n^{frame,u}ₛₗₒₜ - 1}.

FIG. 5 illustrates a resource grid of a slot. The slot includes multiple (e.g., 14 or 12) symbols in the time domain. For each numerology (e.g., subcarrier spacing) and carrier, a resource grid of *N*^{size,u}_{grid,x}**N*^{RB}_{sc} subcarriers and *N*^{subframe,u}_{symb} OFDM symbols is defined, starting at a common resource block (CRB) N^{start,u}_{grid} indicated by higher layer signaling (e.g. RRC signaling), where *N*^{size,u}_{grid,x} is the number of resource blocks (RBs) in the resource grid and the subscript x is DL for downlink and UL for uplink. *N*^{RB}_{sc} is the number of subcarriers per RB. In the 3GPP-based wireless communication system, *N*^{RB}_{sc} is typically 12. There is one resource grid for a given antenna port *p,* a subcarrier spacing configuration *u,* and a transmission link (DL or UL). The carrier bandwidth *N*^{size,u}_{grid} for the subcarrier spacing configuration *u* is given to the UE by a higher layer parameter (e.g., RRC parameter). Each element in the resource grid for the antenna port *p* and the subcarrier spacing configuration *u* is referred to as a resource element (RE) and one complex symbol may be mapped to each RE. Each RE in the resource grid is uniquely identified by an index *k* in the frequency domain and an index *l* representing a symbol location relative to a reference point in the time domain. In the NR system, an RB is defined by 12 consecutive subcarriers in the frequency domain. In the NR system, RBs are classified into CRBs and physical resource blocks (PRBs). The CRBs are numbered from 0 upwards in the frequency domain for the subcarrier spacing configuration *u.* The center of subcarrier 0 of CRB 0 for the subcarrier spacing configuration *u* is equal to 'Point A' which serves as a common reference point for RB grids. The PRBs for subcarrier spacing configuration *u* are defined within a bandwidth part (BWP) and numbered from 0 to *N*^{size,u}_{BWP,i}-1, where i is a number of the BWP. The relation between a PRB n_{PRB} in a BWP i and a CRB n^{u}_{CRB} is given by: n^{u}_{PRB} = n^{u}_{CRB} + *N*^{size,u}_{BWP,i}, where *N*^{size}_{BWP,i} is a CRB in which the BWP starts relative to CRB 0. The BWP includes a plurality of consecutive RBs in the frequency domain. For example, the BWP may be a subset of contiguous CRBs defined for a given numerology uᵢ in the BWP i on a given carrier. A carrier may include a maximum of N (e.g., 5) BWPs. The UE may be configured to have one or more BWPs on a given component carrier. Data communication is performed through an activated BWP and only a predetermined number of BWPs (e.g., one BWP) among BWPs configured for the UE may be active on the component carrier.

For each serving cell in a set of DL BWPs or UL BWPs, the network may configure at least an initial DL BWP and one (if the serving cell is configured with uplink) or two (if supplementary uplink is used) initial UL BWPs. The network may configure additional UL and DL BWPs. For each DL BWP or UL BWP, the UE may be provided the following parameters for the serving cell: i) an SCS; ii) a CP; iii) a CRB *N*^{start}_{BWP} = *O*_{carrier} + *RB*ₛₜₐᵣₜ and the number of contiguous RBs *N*^{size}_{BWP} = L_{RB} provided by an RRC parameter *locationAndBandwidth*, which indicates an offset *RB*ₛₑₜ and a length *L*_{RB} as a resource indicator value (RIV) on the assumption of *N*^{start}_{BWP} = 275, and a value *O*_{carrier} provided by an RRC parameter *offsetToCarrier* for the SCS; an index in the set of DL BWPs or UL BWPs; a set of BWP-common parameters; and a set of BWP-dedicated parameters.

Virtual resource blocks (VRBs) may be defined within the BWP and indexed from 0 to *N*^{size,u}_{BWP,i}-1, where i denotes a BWP number. The VRBs may be mapped to PRBs according to interleaved mapping or non-interleaved mapping. In some implementations, VRB n may be mapped to PRB n for non-interleaved VRB-to-PRB mapping.

NR frequency bands are defined as two types of frequency ranges, i.e., FR1 and FR2. FR2 is also referred to as millimeter wave (mmW). The following table shows frequency ranges within which NR may operate.

**Table 3**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Hereinafter, physical channels that may be used in the 3GPP-based wireless communication system will be described in detail.

A PDCCH carries DCI. For example, the PDCCH (i.e., DCI) carries information about transport format and resource allocation of a downlink shared channel (DL-SCH), information about resource allocation of an uplink shared channel (UL-SCH), paging information about a paging channel (PCH), system information about the DL-SCH, information about resource allocation for a control message, such as a random access response (RAR) transmitted on a PDSCH, of a layer (hereinafter, higher layer) positioned higher than a physical layer among protocol stacks of the UE/BS, a transmit power control command, information about activation/deactivation of configured scheduling (CS), etc. DCI including resource allocation information on the DL-SCH is called PDSCH scheduling DCI, and DCI including resource allocation information on the UL-SCH is called PUSCH scheduling DCI. The DCI includes a cyclic redundancy check (CRC). The CRC is masked/scrambled with various identifiers (e.g., radio network temporary identifier (RNTI)) according to an owner or usage of the PDCCH. For example, if the PDCCH is for a specific UE, the CRS is masked with a UE identifier (e.g., cell-RNTI (C-RNTI)). If the PDCCH is for a paging message, the CRC is masked with a paging RNTI (P-RNTI). If the PDCCH is for system information (e.g., system information block (SIB)), the CRC is masked with a system information RNTI (SI-RNTI). If the PDCCH is for a random access response, the CRC is masked with a random access-RNTI (RA-RNTI).

When a PDCCH on one serving cell schedules a PDSCH or a PUSCH on another serving cell, it is referred to cross-carrier scheduling. Cross-carrier scheduling with a carrier indicator field (CIF) may allow a PDCCH on a serving cell to schedule resources on another serving cell. When a PDSCH on a serving cell schedules a PDSCH or a PUSCH on the serving cell, it is referred to as self-carrier scheduling. When the cross-carrier scheduling is used in a cell, the BS may provide information about a cell scheduling the cell to the UE. For example, the BS may inform the UE whether a serving cell is scheduled by a PDCCH on another (scheduling) cell or scheduled by the serving cell. If the serving cell is scheduled by the other (scheduling) cell, the BS may inform the UE which cell signals DL assignments and UL grants for the serving cell. In the present disclosure, a cell carrying a PDCCH is referred to as a scheduling cell, and a cell where transmission of a PUSCH or a PDSCH is scheduled by DCI included in the PDCCH, that is, a cell carrying the PUSCH or PDSCH scheduled by the PDCCH is referred to as a scheduled cell.

A PDSCH is a physical layer DL channel for DL data transport. The PDSCH carries DL data (e.g., DL-SCH transport block) and is subjected to modulation such as quadrature phase shift keying (QPSK), 16 quadrature amplitude modulation (QAM), 64 QAM, 256 QAM, etc. A codeword is generated by encoding a transport block (TB). The PDSCH may carry a maximum of two codewords. Scrambling and modulation mapping per codeword may be performed and modulation symbols generated from each codeword may be mapped to one or more layers. Each layer is mapped to a radio resource together with a DMRS and generated as an OFDM symbol signal. Then, the OFDM symbol signal is transmitted through a corresponding antenna port.

For UL-SCH data transmission, the UE needs to have UL resources available to the UE, and for DL-SCH data reception, the UE needs to have DL resources available to the UE. The UL and DL resources are assigned to the UE through resource allocation by the BS. Resource allocation may include time domain resource allocation (TDRA) and frequency domain resource allocation (FDRA). In the present disclosure, UL resource allocation is also referred to as an UL grant, and DL resource allocation is also referred to as a DL assignment. The UL grant may be dynamically received by the UE on a PDCCH or in an RAR, or the UL grant may be semi-persistently configured to the UE through RRC signaling from the BS. The DL assignment may be dynamically received by the UE on a PDCCH or semi-persistently configured to the UE through RRC signaling from the BS.

On UL, the BS may dynamically allocate UL resources to the UE through PDCCH(s) addressed to a temporary identifier (cell radio network temporary identifier, C-RNTI). The UE monitors the PDCCH(s) to detect possible UL grants for UL transmission. The BS may allocate the UL resources using a configured grant (CG) for the UE. Two types of configured grants, Type 1 and Type 2, may be used. In the case of Type 1, the BS directly provides a configured UL grant (including a periodicity) via RRC signaling. In the case of Type 2, the BS configures the periodicity of an RRC-configured UL grant via RRC signaling and may signal and activate or deactivate the configured UL grant through a PDCCH addressed to a configured scheduling RNTI (CS-RNTI). For example, in the case of Type 2, the PDCCH addressed to the CS-RNTI indicates that the corresponding UL grant may be implicitly reused according to the periodicity configured via RRC signaling until deactivation.

On DL, the BS may dynamically allocate DL resources to the UE through PDCCH(s) addressed to a C-RNTI. The UE monitors the PDCCH(s) to detect possible DL assignments. The BS may allocate the DL resources to the UE using semi-persistent scheduling (SPS). The BS may configure the periodicity of DL assignments configured via RRC signaling and signal and activate or deactivate the configured DL assignments through a PDCCH addressed to a CS-RNTI. For example, the PDCCH addressed to the CS-RNTI indicates that the corresponding DL assignment may be implicitly reused according to the periodicity configured via RRC signaling until deactivation.

A CORESET, which is a set of time-frequency resources on which the UE is capable of monitoring a PDCCH, may be defined and/or configured. The CORESET has a time duration of one to three OFDM symbols and includes a set of PRBs. The PRBs included in the CORESET and the CORESET duration may be provided to the UE through higher layer (e.g., RRC) signaling. The UE may monitor a set of PDCCH candidates in configured CORESET(s) according to corresponding search space sets. In the present disclosure, monitoring implies decoding (blind decoding) of each PDCCH candidate based on monitored DCI formats.

The set of the PDCCH candidates that the UE monitors is defined in terms of PDCCH search space sets. The search space sets may be common search space (CSS) sets or UE-specific search space (USS) sets. Each CORESET configuration is associated with one or more search space sets and each search space set is associated with one CORESET configuration.

A UE monitors a set of PDCCH candidates in one or more CORESETs on the active DL BWP on each activated serving cell configured with PDCCH monitoring according to corresponding search space sets where monitoring implies receiving each PDCCH candidate and decoding according to the monitored DCI formats.

The UE may monitor PDCCH candidates in one or more SS sets in a slot according to the configuration of the CORESET/SS set. An occasion (e.g., time/frequency resource) to monitor PDCCH candidates is defined as a PDCCH (monitoring) occasion. One or more PDCCH (monitoring) occasions may be configured within a slot.

### Conditional handover (CHO)

Handover is a procedure for ensuring seamless connectivity when a UE moves within a network. Generally, when the UE performs measurements on neighboring cells and reports them to the network, the network determines whether the UE should perform handover. For example, a source BS connected to the UE may determine to cause the UE to disconnect from the source BS and connect to another BS (i.e., a target BS), or to hand over the UE from a source cell to another cell (i.e., a target cell). The source BS may cause the UE to perform handover by transmitting a handover command to the UE. Upon receipt of the handover command, the UE may disconnect from the source BS/cell and connect to the target BS/cell. When the quality of the serving cell is adequate enough for the UE to receive the handover command, and the quality of the target cell is good enough for the UE to access it, general handover may be successfully performed. However, in the case of a millimeter-wave frequency range, there is a probability that the general handover may not be performed due to rapid signal quality degradation and extensive BS deployment.

Unlike the general handover executed by a UE upon receipt of a handover command from the network, CHO is handover executed by the UE when one or more handover execution conditions are met. Since the CHO does not require a handover command from the network and is performed when specific conditions are met, the probability of handover failure caused by channel state degradation may be reduced, thereby lowering the possibility of radio link failure.

Upon receipt of a CHO configuration, the UE may start evaluating execution condition(s), and once the handover is executed, stop evaluating the execution condition(s). The CHO configuration may include a configuration of CHO candidate cell(s) generated by candidate BS(s) and execution condition(s) generated by the source BS. The execution condition(s) may include one or more trigger conditions. For example, the following may be used as trigger condition(s) that may be included in the execution condition(s):
- CondEvent A3: A conditional reconfiguration candidate becomes an amount of offset better than a PCell/PSCell,
- CondEvent A4: A conditional reconfiguration candidate becomes better than an absolute threshold. CondEvent A4 may also be used for a current PSCell (i.e., in case it is configured as a candidate PSCell for CondEvent A4 evaluation) for CHO with candidate SCG(s) case, and/or
- CondEvent A5: The PCell/PSCell becomes worse than absolute threshold 1 and a conditional reconfiguration candidate becomes better than another absolute threshold 2.

The offset of CondEvent A3, the absolute threshold of CondEvent A4, and absolute threshold 1 and absolute threshold 2 of CondEvent A5 may be provided through a configuration for the trigger condition(s) when the events are configured as the trigger condition(s) for CHO.

One or two trigger quantities (e.g., reference signal received power (RSRP), reference signal received quality (RSRQ), signal to interference plus noise ratio (SINR), and so on) may be configured for the evaluation of the CHO execution condition(s) for a single candidate cell.

### UE Discontinuous reception (DRX)

To reduce power consumption, the UE uses DRX. The UE operating based on DRX repeatedly turns its reception operation on and off. The characteristics of DRX, which is used to reduce unnecessary power consumption of the UE, are as follows. For DRX, there are separate defined structures: a structure (hereinafter, referred to as I-DRX) for a UE in an RRC_IDLE state where an RRC connection has not been set up between the UE and the BS, and a structure (hereinafter, referred to as C-DRX) for a UE in an RRC_CONNECTED state where an RRC connection has been set up between the UE and the BS. Both DRX structures are designed to define a periodical interval where the UE may expect to receive DL signals (e.g., an active time or on-duration period), so that unnecessary power consumption is reduced in the other periods. In particular, in the case of C-DRX, the start position of the on-duration period is periodically defined according to NR Rel-16 specifications. In this case, the size (i.e., DRX cycle) of the configured period may be determined/configured through higher layer signaling such as RRC signaling provided by the BS to the UE.

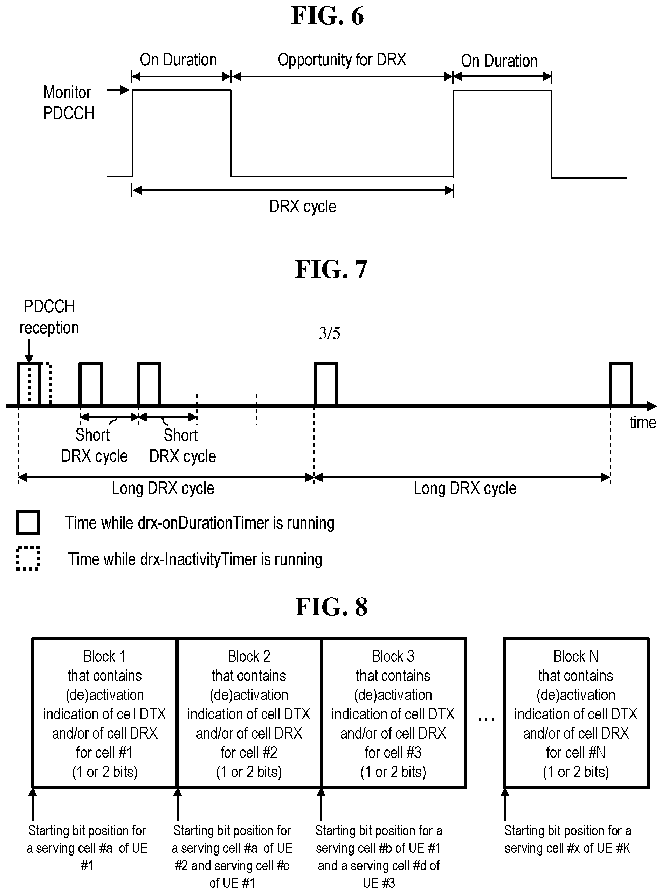

FIG. 6 illustrates a discontinuous reception (DRX) operation. Specifically, FIG. 6 shows a DRX cycle for a UE in the RRC_CONNECTED state.

Referring to FIG. 6, a DRX cycle includes an On Duration and an Opportunity for DRX. The DRX cycle defines a time interval between periodic repetitions of the On Duration followed by an inactivity possible period. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, the UE may perform PDCCH monitoring/reception discontinuously in the time domain in the procedure and/or method according to implementation(s) of the present disclosure. For example, when DRX is configured, PDCCH reception occasions (e.g., slots with PDCCH search spaces) may be configured discontinuously according to a DRX configuration in the present disclosure. On the contrary, when DRX is not configured, the UE may perform PDCCH monitoring/reception continuously in the time domain. For example, when DRX is not configured, PDCCH reception occasions (e.g., slots with PDCCH search spaces) may be configured continuously in the present disclosure. Irrespective of whether DRX is configured, PDCCH monitoring may be restricted during a time period configured as a measurement gap. DRX configuration information is received through higher layer (e.g., RRC) signaling, and DRX ON/OFF is controlled by DRX commands from the MAC layer. Once DRX is configured, the UE may discontinuously perform PDCCH monitoring as shown in FIG. 6.

The following table describes a DRX operation of a UE. Referring to the following table, DRX configuration information is received by higher-layer signaling (e.g., RRC signaling), and DRX ON/OFF is controlled by a DRX command from the MAC layer. Once DRX is configured, the UE may perform PDCCH monitoring discontinuously, as illustrated in FIG. 6.

**Table 4**

| | Type of signals | UE procedure |
|---|---|---|
| 1st step | RRC signalling (MAC-CellGroupConfig) | - Receive DRX configuration information |
| 2nd Step | MAC CE ((Long) DRX command MAC CE) | - Receive DRX command |
| 3rd Step | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX.
- Value of drx-onDurationTimer: configures the duration at the beginning of a DRX cycle.
- Value of drx-SlotOffset: configures the delay before starting the drx-onDurationTimer.
- Value of drx-InactivityTimer: the duration after the PDCCH occasion in which a PDCCH indicates a new UL or DL transmission for the MAC entity.
- Value of drxRetransmissionTimerDL (per DL HARQ process except for the broadcast process): configures the maximum duration until a DL retransmission is received.
- Value of drxRetransmissionTimerUL (per UL HARQ process): configures the maximum duration until a grant for UL retransmission is received.
- Value of drx-HARQ-RTT-TimerDL (per DL HARQ process except for the broadcast process): configures the maximum duration from reception of initial DL transmission to reception of DL assignment for HARQ retransmission.
- Value of drx-HARQ-RTT-TimerUL (per UL HARQ process): configures the maximum duration from reception of a grant for initial UL transmission to reception of a grant for UL retransmission.
- drx-LongCycleStartOffset: configures the Long DRX cycle and drx-StartOffset which defines the subframe where the Long and Short DRX cycle starts.
- drx-ShortCycle (optional): configures the Short DRX cycle.
- drx-ShortCycleTimer (optional): configures the duration the UE shall follow the Short DRX cycle. For example, a value in multiples of the short DRX cycle may be configured by drx-CycleTimer. For example, the value of n may correspond to n*drx-ShortCycle.

The UE may perform PDCCH monitoring on serving cells within a DRX group if the DRX group is within the active time. In this case, the DRX group refers to a group of serving cells that are configured by RRC and have the same DRX active time. The active time here refers to a total duration during which the UE monitors the PDCCH. The active time may include the ON duration of a DRX cycle, the time when the UE performs continuous reception while the inactivity timer has not expired, and the time when the UE performs continuous reception while waiting for a retransmission opportunity. For example, when DRX is configured, the Active Time for serving Cells in a DRX group includes the time while i) drx-onDurationTimer or drx-InactivityTimer configured for the DRX group is running; or ii) drx-RetransmissionTimerDL or drx-RetransmissionTimerUL is running on any serving Cell in the DRX group; or ra-ContentionResoultionTimer or msgB-RsponseWindow is running; or a PDCCH indicating a new transmission addressed to the C-RNTI of a MAC entity of the UE has not been received after successful reception of a random access response for the Random Access Preamble not selected by the MAC entity among the contention-based random access preambles.

The UE may be configured with one or multiple DRX groups through RRC signaling from the BS. For example, if two DRX groups are configured, each serving cell is uniquely assigned to one of the two DRX groups. The DRX parameters: drx-onDurationTimer and drx-InactivityTimer are configured separately for each DRX group. The DRX parameters: drx-SlotOffset, drx-RetransmissionTimerDL, drx-RetransmissionTimerUL, drx-LongCycleStartOffset, drx-ShortCycle (optional), drx-ShortCycleTimer (optional), drx-HARQ-RTT-TimerDL, and drx-HARQ-RTT-TimerUL are common to the DRX groups. Since each serving cell belongs to only one of the DRX groups, and the DRX parameters drx-onDurationTimer and drx-InactivityTimer are configured for each DRX group, while the other DRX parameters are common to the DRX groups, it may be considered that the serving cell is associated with only one set of DRX parameters.

FIG. 7 illustrates a case in which a long DRX cycle and a short DRX cycle are configured. Specifically, FIG. 7 shows a case in which *drx-ShortCycleTimer* is set to 2.

The BS may configure a long DRX cycle and an additional short DRX cycle, which is shorter than the long DRX cycle. If no short DRX cycle is configured, the UE may follow the long DRX cycle. When configuring the short DRX cycle, the BS may set the duration of the long DRX cycle to be a positive integer multiple of the short DRX cycle. The same *onDurationTimer* value may be configured for the long DRX cycle and the short DRX cycle. If there is no data activity (e.g., no PDCCH is received) during the ON duration of the long DRX cycle, the UE follows the long DRX cycle as if the short DRX cycle were not configured. If there is data activity during the on-duration of the long DRX cycle, for example, while *drx-onDurationTimer* is running, the UE switches to the short DRX cycle and follows the short DRX cycle for a certain period of time (e.g., while *drx-ShortCycleTimer* is running). In this case, the start of the ON duration in the short DRX cycle is determined by *drx-StartOffset* and *drx-SlotOffset*, just like in the long DRX cycle. Referring to FIG. 7, if there is no data activity during the time that the UE follows the short DRX cycle, for example, if there is no data activity during the period defined by *drx-ShortCycleTimer* * drx-ShortCycle, the UE switches from short DRX cycles each having the duration by *drx-ShortCycleTimer* to the long DRX cycle.

### Network Energy Saving and Cell DRX/DTX

The energy saving of the BS is significantly considered in wireless communication systems, including 3GPP, due to its potential contribution to building eco-friendly networks through reduction of carbon emissions and curtailing operational expenditures (OPEX) for communication operators. In particular, as the demand for high transmission rates has escalated with the advent of 5G communications, BSs have been required to be equipped with a greater number of antennas and provide services in broader bandwidths and frequency bands. According to recent study, the energy cost of the BS has reached up to 20% of the total OPEX. Due to the increased interest in the energy saving of the BS, 3GPP NR release 18 has approved a new study item called "study on network energy savings." For example, to enhance energy-saving capabilities in terms of the transmission and reception of the BS, this study investigates how to achieve more efficient operations for transmission and/or reception in the time, frequency, space, and power domains dynamically and/or semi-statically with finer granularity of adaptation based on one or more network energy-saving techniques, using potential support/feedback from the UE and potential UE support information.

When the BS operates in network energy saving (NES) mode for energy saving (ES), it means that the BS has preconfigured a plurality of OFF periods (e.g., discontinuous transmission (DTX) periods of the BS) during which it turns off transmissions of a specific DL signal, and dynamically indicates one of these OFF periods to indicate that the DL signal is not transmitted during the predefined time period and thus reduce the power consumption of the BS and the UE. The NES mode may refer to an operation mode in which the power consumption of the BS and the UE is reduced by performing operations in the frequency domain, such as BWP switching and dynamic resource block (RB) adaptation, and operations in the spatial domain, such as semi-statically or dynamically turning off a specific BS reception antenna port to stop transmission and/or reception through it, as well as operations in the time domain.

As described above, when the UE is in connected mode after initial connection to the BS, it should continuously perform PDCCH monitoring to identify whether there is a scheduled transmission for it in each of its configured search spaces. However, when such scheduling doesn't happen all the time, the battery of the UE may drain quickly from performing unnecessary PDCCH monitoring every time. Accordingly, the BS may configure the UE with an ON period (ON duration) for PDCCH monitoring and an OFF period requiring no monitoring. That is, the BS may configure C-DRX for the UE to save the power of the UE. The C-DRX of the UE may also help the BS with power saving. For example, since the BS does not need to transmit a PDCCH to a specific UE during a C-DRX OFF period of the specific UE, the BS may use resources (e.g., radio resources within the C-DRX OFF period of the UE) for other purposes or achieve an ES gain from DTX/DRX. However, since the UE may perform transmissions in preconfigured resources (e.g., an SR, a PUCCH, a CG PUSCH, or the like) without restriction when needed, even during the OFF period, the BS should remain ready to receive these unexpected UL transmissions from the UE. Further, because C-DRX is configured UE-specifically, DRX cycles or ON/OFF periods are not aligned between UEs within a cell (or BS). Therefore, when the ON periods of UEs are configured in a time division multiplexing (TDM) manner, the BS may not sleep because it has to be awake to transmit a PDCCH in each ON period of the UEs within the cell (or the BS), which makes it difficult for the BS to expect an ES gain.

Accordingly, in some implementations of the present disclosure, the BS may save energy by turning off transmission/reception of a specific signal/channel during a non-active period through a cell(-specific) DTX/DRX configuration that repeats active and inactive periods, similar to UE C-DRX. To transmit or receive data, the UE should establish a connection with the BS to enter the RRC_CONNECTED mode/state. When there is no activity from the UE for a specific time, the BS may transition the UE to the RRC_IDLE mode/state to reduce the power consumption of the UE. Since the UE should transition back to the connected mode whenever transmission/reception is required, RRC signaling occurs during RRC connection establishment of the UE, increasing latency. When the UE needs to frequently transmit small data, transitions between RRC_IDLE and RRC_CONNECTED cause not only an increase in latency but also an increase in signaling overhead. To reduce BS signaling overhead and data transmission/reception latency caused by these frequent RRC state changes, a new state called RRC_INACTIVE has been introduced. The INACTIVE mode (i.e., RRC_INACTIVE mode) may allow a data transmission/reception operation to be performed quickly and with low signaling overhead by suspending the RRC connection. In some implementations of the present disclosure described below, a description will be given of a method for configuring parameters of a cell DTX/DRX configuration, an activation method, and method(s) for transmitting/receiving a signal and channel affected by a cell DTX/DRX operation, for applying the cell DTX/DRX operation not only to UEs in the connected mode but also to UE(s) in the IDLE mode and UE(s) in the INACTIVE mode.

The UE in CONNECTED mode performs PDCCH monitoring during a periodic ON duration to identify any UL or DL transmissions/receptions to be performed. Upon receipt of a PDCCH, the UE performs a DL reception or a UL transmission according to an indication of the PDCCH. For UL, in the presence of data to be transmitted in a UL buffer, the UE may wake up and transmit a scheduling request (SR) regardless of C-DRX, even if the UE is in sleep mode. A UE in idle mode periodically performs paging monitoring. When the UE is not a target of the paging, it may re-enter the sleep mode and operate in the idle mode (idle mode DRX (i.e., I-DRX)). When it is said that the UE operates in the sleep mode, this may mean that the UE performs an SR transmission "regardless of an active time determined by C-DRX" or "even during periods other than the active time determined by C-DRX." In the C-DRX operation, a DRX cycle is a repeating time period including an ON duration and an OFF duration. The length of a DRX cycle may be defined from the start of an ON duration until just before the next one. DRX cycles may be categorized into a long DRX cycle and a short DRX cycle. When the DRX cycle length increases, latency may increase because when the BS has a PDSCH to be transmitted to the UE immediately after a specific ON duration of the UE ends, the BS should wait until the next ON duration of the UE. From the perspective of the BS, since the UE does not transmit periodic CSI (P-CSI) or a sounding reference signal (SRS) during the OFF period, the BS may allocate those resources (i.e., resources for the P-CSI or SRS transmission) to other UEs, thereby increasing resource utilization. The BS may also switch to power saving mode during the OFF period of the UE to save energy.

In relation to C-DRX, the BS may indicate the UE to immediately enter DRX sleep mode without operating in active mode until the end of the ON duration by a DRX command MAC control element (CE). For example, the BS may indicate the UE to end its current active time and immediately enter the DRX cycle. When the UE is configured only with the long DRX cycle, it may operate in the long DRX cycle (based on the DRX command MAC CE). When both long and short DRX cycles are configured for the UE, the UE immediately enters the short DRX cycle after receiving the DRX command MAC CE. Further, when the BS provides a long DRX command MAC CE, the UE may operate in the long DRX cycle even if the short DRX cycle is configured. The BS may also adjust/change the start point of the long DRX cycle by an RRC parameter *drx-LongCycleStartOffset* used to configure the long DRX cycle and *drx-SlotOffset* that defines a subframe where the long and short DRX cycles start. The value of the RRC parameter *drx-LongCycleStartOffset* is defined in ms, so that the long DRX cycle may start at a slot boundary. Additionally, another RRC parameter *drx-SlotOffset* may be used to configure the start point of an ON duration with a slot-level granularity. In this case, it is defined as a relative position of the ON duration by applying a slot offset indicated (by *drx-SlotOffset*) to a reference point indicated by *drx-LongCycleStartOffset*.

The UE may save energy by waking up only during the ON duration to monitor a PDCCH transmitted to it according to a C-DRX configuration, compared to continuously monitoring a PDCCH (e.g., in every slot). Further, when the BS has no data to transmit to the UE during an upcoming ON duration of the UE, the BS may save even more of the battery of the UE by transmitting a wake-up signal (WUS) and thus indicating no need to wake up in the ON duration (i.e., no need to start an onDurationTimer), before the ON duration of the UE starts. In this context, when the BS has no data to transmit/receive to/from a UE with a C-DRX configuration during an upcoming ON duration of the UE, the BS may indicate to the UE that the UE does not need to wake up in this On duration by transmitting a WUS transmittable in DCI format 2_6, which is used to notify one or more UEs of power saving information outside the DRX active time, in a WUS occasion configured before the ON duration. When receiving the WUS (e.g., a wake-up indication via DCI format 2_6), the UE may continue to remain in the sleep state without transitioning to the active mode, thereby saving more energy.

In the following description, UE DRX, or C-DRX and I-DRX refers to discontinuous reception from the perspective of the UE. Cell DRX refers to discontinuous reception from perspective of the BS, while cell DTX refers to discontinuous transmission from the perspective of the BS. From the perspective of the UE, cell DRX may mean turning off UL transmission, and cell DTX may mean turning off DL reception.

A cell DTX/DRX configuration may include parameters such as a periodicity, a slot/offset, and an On-duration, similar to a C-DRX configuration for a UE. A cell DTX configuration and a cell DRX configuration may be configured and activated/deactivated independently. That is, only cell DTX without a cell DRX configuration may be configured and activated, whereby a cell DTX operation may be performed, or conversely, only cell DRX without a cell DTX configuration may be configured and activated, whereby a cell DRX operation may be performed. Even if both cell DTX and cell DRX are configured, it is also possible that only one of the two configurations may be activated. According to the cell DTX/DRX operation, similar to the structure of C-DRX of the UE, an active period (also referred to as ON duration) in which all signals and channels may be transmitted/received without restriction, and a non-active period (a period outside the active period) in which transmissions/receptions of all signals and channels are turned off or only specific signals and channels are restrictively transmitted/received (e.g., only transmissions/receptions of channels/signals such as PDCCH transmissions or RACH/SR PUCCH receptions are allowed), may be configured. The cell DTX/DRX configuration may be configured and activated only through RRC (i.e., only through RRC signaling), or all or some parameters for the cell DTX/DRX may be configured by RRC and then activated by L1 signaling (e.g., (group-common) DCI) such as a PDCCH or DCI. In the active period of the cell DTX/DRX, all signals and channels may be transmitted/received without special constraints on transmission/reception, as in a normal operation of the BS. A time period outside the active period is basically considered a non-active period in which transmissions/receptions except for preconfigured signal(s) and channel(s) are restricted, and the BS may achieve an ES gain through an operation of performing only such minimal transmission/reception. Accordingly, an operation performed when an NES state/mode is on may be considered for the time period outside the active period.

For example, to reduce an active time for DL transmission/UL reception of the BS, the UE may be configured with a periodic cell DTX/DRX pattern (i.e., active and non-active periods). The cell DTX/DRX pattern may be common to all UEs within the cell. Each serving cell may be configured with a periodic cell DTX pattern by RRC. The BS may configure only cell DTX, only cell DRX, or both for a cell. Cell DTX and cell DRX patterns may be configured and activated separately. A maximum of N cell DTX/DRX patterns per MAC entity may be configured for different serving cells, where N is a predefined value. Cell DTX/DRX may be activated/deactivated by RRC signaling or L1 group common signaling (e.g., signaling via a group-common PDCCH). The BS may control cell DTX and cell DRX operations by providing a cell DTX/DRX configuration through RRC signaling. For example, through the cell DTX/DRX configuration, the BS may provide RRC parameters for a timer (e.g., a cell DTX/DRX ON duration timer) related to an active period at the start of a cell DTX/DRX cycle, a subframe where the cycle starts, a delay before the active period starts, and a cell DTX/DRX cycle period (i.e., a cell DTX/DRX periodicity). An active period in cell DTX/DRX may be a period during which the UE waits to receive PDCCHs or SPS occasions and to transmit an SR or a CG. The cell DTX/DRX cycle specifies a periodic repetition of an active period followed by an inactive period. The active period and cycle parameters may be common between cell DTX and cell DRX. The BS may configure C-DRX and cell DTX/DRX to have at least a partial overlap between a C-DRX ON period of the UE and a cell DTX/DRX active period. For instance, the BS may configure a C-DRX periodicity of the UE to be an integer multiple of a cell DTX/DRX periodicity, or vice versa.

In some implementations, a cell DTX operation may affect the monitoring activity of the UE for PDCCHs and configured DL assignments in RRC_CONNECTED. For a serving cell for which cell DTX is configured and activated, the UE (e.g., a MAC entity of the UE) monitors a PDCCH on the serving cell, when the serving cell is in the cell DTX active period. The cell DTX active period of the serving cell may include a time period during which a cell DTX/DRX ON duration timer is running for the serving cell. For example, for the serving cell for which cell DTX is configured and activated, when the serving cell is not in the cell DTX active period, the UE (e.g., the MAC entity of the UE) may not monitor a PDCCH on the serving cell, and may not receive a transport block (i.e., not perform an SPS PDSCH reception) on the serving cell according to a configured DL assignment for SPS, regardless of whether the UE is in a UE C-DRX active period.

In some implementations, a cell DRX operation may control an SR and configured UL grant transmission activity of the UE in RRC_CONNECTED. In some scenarios, when cell DRX is configured and activated for a serving cell, the UE (e.g., the MAC entity of the UE) may, in principle, perform, on the serving cell, a CG PUSCH transmission and a PUCCH transmission (if the serving cell is a PUCCH cell) only in the cell DRX active period. For example, when the serving cell with configured and activated cell DRX is within the cell DRX non-active period, the UE (e.g., the MAC entity of the UE) does not transmit an SR in a PUCCH resource for SR (even if the serving cell is a PUCCH cell), does not report periodic CSI on a PUCCH (even if the serving cell is a PUCCH cell), and does not report semi-persistent CSI configured on a PUSCH of the serving cell. In other words, when cell DRX is configured and activated for a serving cell, the UE may not perform a transmission in CG resources of the serving cell or may not transmit an SR on the serving cell, during the DRX non-active period.

Separately from a cell DTX/DRX configuration in which a preconfigured specific ON/OFF duration pattern is repeated periodically, the BS may perform cell OFF that completely turns off a specific cell for a specific time, for further energy saving. When the cell is turned off, UEs in the cell may not perform data transmission/reception at all, and thus need to move to another cell that is turned on. In particular, when the cell to be off is the PCell of specific UEs, it may be necessary to trigger a handover procedure for the UEs to change the PCell.

The aforementioned CHO refers to a process in which when a preconfigured condition is satisfied, a UE performs/triggers a handover procedure on its own even if a BS does not directly commands the handover. A UE configured with CHO by the BS of a source cell evaluates whether one or more handover conditions (e.g., the RSRP/RSRQ, SINR, and so on of a reference signal) are satisfied, and when the conditions are satisfied, performs a handover procedure of transmitting an RACH to a target cell. When there is a CHO configuration, the UE may start evaluating a CHO execution condition. The UE may need to perform handover by receiving a handover command from the BS or continue the evaluation of the CHO execution condition until it performs handover to a candidate cell that satisfies the CHO execution condition. That is, when the CHO configuration is provided, the UE may need to continue measurement for evaluating the CHO execution condition, while unnecessarily consuming power even in a situation where RRC reconfiguration is not required. When the CHO configuration is provided to the UE and there is a cell DTX/DRX configuration for a serving cell of the UE, it may be determined that the CHO execution condition is satisfied due to a non-active period of cell DTX/DRX, which may lead to unnecessary handover.

In consideration of the above, the BS may dynamically instruct the UE to trigger the CHO procedure (e.g., to use the CHO execution condition) in some implementations of the present disclosure described below. For example, a handover procedure trigger may be dynamically indicated by L1 (UE-specific or group-common) signaling. In particular, in some implementations of the present disclosure described below, the handover procedure trigger may be transmitted to a plurality of UEs within a cell in a group-common manner by using a DCI format for activation/deactivation of a cell DTX/DRX configuration. In this case, there may be an advantage in terms of signaling overhead. Additionally, in some implementations of the present disclosure described below, since the DCI format for activation/deactivation of the cell DTX/DRX configuration includes an information block for each serving cell, the BS may use the DCI format to trigger the handover procedure by adding a cell OFF indication bit to an information block for the PCell of a specific UE.

A description will be given below of some implementations of the present disclosure for an L1 signaling method for, when a BS intends to temporarily turn off a cell for a specific time period for energy saving, triggering a handover procedure for UEs within the cell, for handover to another cell.

**<Method #1> A method of adding a CHO triggering bit for cell OFF to DCI (e.g., DCI format 2_9) indicating activation/deactivation of a cell DTX/DRX configuration, and a method of determining the position of a CHO triggering bit and the bit position of an information block (i.e., indicator field), for a UE.**
**(1) A method of configuring an additional RRC parameter for indicating the (starting) position of a CHO triggering bit, in addition to an RRC parameter indicating the starting bit position of an information block within DCI format 2_9.**
**(2) A method of configuring the bit width of an information block in addition to an RRC parameter indicating the starting bit position of an information block within DCI format 2_9.**
**(3) A method of, when a CHO triggering bit configuration is configured by a separate RRC parameter, implicitly indicating that a CHO triggering bit is added after a starting bit position (for a PCell).**
**(4) A method of, when a CHO triggering bit configured in an information block corresponding to an SCell from the perspective of a specific UE within DCI format 2_9 indicates cell OFF (or cell ON), deactivating the SCell (or activating the SCell).**

FIG. 8 illustrates a structure of a DCI format for activation/deactivation of a cell DTX/DRX configuration.

In some implementations of the present disclosure, DCI format 2_9 may be used to activate or deactivate a cell DTX and/or DRX configuration for one or more serving cells for one or more UEs.

For example, a UE may be configured with a cell DTX configuration and/or a cell DRX configuration for a serving cell, and activation or deactivation of the configured cell DTX/DRX configuration by higher-layer signaling such as RRC signaling, and may receive an activation/deactivation indication dynamically in a group-common manner through DCI format 2_9. DCI format 2_9 may be used for multiple UEs. Further, each UE may have one or more serving cells. Accordingly, as illustrated in FIG. 8, DCI format 2_9 may include a plurality of information blocks for serving cell(s) of respective multiple UEs, and each information block may be configured to include at least 1 bit for activation or deactivation of a cell DTX configuration and/or 1 bit for activation or deactivation of a cell DRX configuration, configured for a corresponding serving cell. When a UE is configured to monitor DCI format 2_9 in a Type-3 common search space, it may be preconfigured with the position of an information block it should monitor within DCI format 2_9 through an RRC parameter (hereinafter, *position-inDCI-NES*). Referring to FIG. 8, for example, when Cell #1, Cell #2, and Cell #3 are configured as serving cell #a, serving cell #c, and serving cell #b of UE #1, respectively, Cell #2 is configured as serving cell #a of UE #2, and Cell #3 is configured as serving cell #d of UE #3, among cells for which the BS will support a cell DTX/DRX operation, the BS provides a cell DTX/DRX configuration for a corresponding serving cell to each of UEs having serving cell(s) for which a cell DTX/DRX operation is to be configured. When the BS intends to activate the cell DTX/DRX configuration by DCI format 2_9, it may provide the corresponding UE(s) with the starting bit position of an information block in DCI format 2_9 for the serving cell having the cell DTX/DRX configuration. When the BS transmits DCI format 2_9 including Block 1 to Block N, each UE may monitor DCI format 2_9 in a Type-3 common search space, detect DCI format 2_9, read information block(s) for its serving cell(s) at the starting bit position(s) corresponding to the serving cell(s), and activate or deactivate cell DTX/DRX configured for the serving cell(s) based on the bit value(s) of the information block(s).

The bit width of each information block in DCI format 2_9 may vary depending on the presence or absence of a cell DTX/DRX configuration. For example, in the case of a serving cell configured with only cell DTX or cell DRX, a corresponding information block may include 1 bit, and the 1 bit may indicate deactivation of the cell DTX or cell DRX for the serving cell depending on whether its value is 0 or 1. In another example, when a serving cell is configured with both cell DTX and cell DRX, a corresponding information block may include 2 bits, a first bit of the 2 bits may indicate activation or deactivation of the cell DTX operation, and a second bit may indicate activation or deactivation of the cell DRX operation.

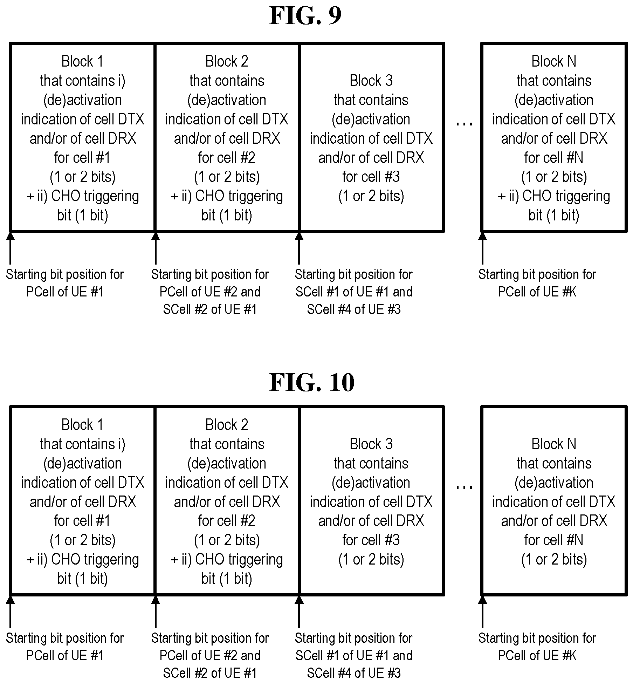

FIGS. 9 and 10 illustrate structures of DCI format 2_9 according to some implementations of the present disclosure.

In some implementations of the present disclosure, DCI format 2_9 may be used to provide a cell OFF mode indication (i.e., NES mode indication) for primary cell(s) of one or more UEs. For example, referring to FIG. 9, a CHO triggering bit for cell OFF may be added in an information block for a specific serving cell (e.g., PCell) among information blocks in DCI format 2_9. In this case, the information block corresponding to the serving cell may include 1 bit, 2 bits, or n bits depending on the presence or absence of a cell DTX/DRX configuration. On the assumption that the CHO triggering bit is 1 bit, for example, when there is no cell DTX/DRX configuration but the CHO triggering bit exists for a serving cell, an information block for the serving cell may include 1 bit. When only one of cell DTX and cell DRX is configured and the CHO triggering bit exists for the serving cell, the information block for the serving cell may include 2 bits, and when both cell DTX and cell DRX are configured and the CHO triggering bit exists for the serving cell, the information block for the serving cell may include 3 bits.

Alternatively, in some implementations of the present disclosure, the CHO triggering bit may be configured at a specific position separately from the information block(s) indicating activation or deactivation of the cell DTX/DRX configuration in DCI format 2_9. For example, CHO triggering bit(s) may be configured at the very beginning or very end of DCI format 2_9, or before or after a specific information block.

When a bit for indicating CHO triggering is added in DCI format 2_9, the UE should know the position of the bit in DCI format 2_9 in order to monitor the bit. As described before, when the UE is configured to monitor DCI format 2_9 in a Type-3 CSS (i.e., Type3-PDCCH CSS), the UE is preconfigured with the position of an information block to be monitored by the UE within DCI format 2_9 through an RRC parameter (e.g., *position-inDCI-NES*). Similarly, in some implementations of the present disclosure, an additional (starting) position indicating RRC parameter for indicating the position of a bit for CHO triggering may be configured. In some implementations, the RRC parameter for indicating the position of the CHO triggering bit may be configured to indicate an offset from *position-inDCI-NES* (for a PCell). For example, when the CHO triggering bit is 1 bit and a CHO position is configured to be the very end of a block indicating (de)activation of a cell DTX/DRX configuration for each serving cell within DCI format 2_9, the UE may read the 1-bit indication field at the position and determine whether cell OFF of the PCell is indicated based on whether it is '0' or '1'. When cell OFF is indicated, the UE may trigger a preconfigured CHO procedure to perform handover to a target cell. For example, when the CHO triggering bit has a value indicating cell OFF, that is, a value indicating that the CHO procedure is triggered, the UE evaluates whether a CHO execution condition is satisfied for CHO candidate cell(s). When at least one CHO candidate cell satisfies the CHO execution condition, the UE may perform the CHO procedure to disconnect from the PCell and synchronize with the CHO candidate cell that satisfies the CHO execution condition.

In another method, the BS may add a CHO triggering bit and configure its position by configuring the bit width of an information block in addition to an RRC parameter (e.g., *position-inDCI-NES*) indicating the position of the information block. When the UE has a plurality of serving cells configured with cell DTX/DRX, the UE monitors a plurality of information blocks in DCI format 2_9. The bit width of the information block corresponding to the PCell is 1 bit when only cell DTX or cell DRX is configured, and 2 bits when both cell DTX and cell DRX are configured. However, when there is an additional configuration related to the bit width, the configuration related to the bit width may inform the UE that the CHO triggering bit is included in the corresponding information block in addition to cell DTX/DRX activation (deactivation) bit(s). For example, when only cell DTX is configured for the PCell of a specific UE but the bit width is configured as 2 bits, it may inform the UE that one of the 2 bits is for cell DTX (de)activation and the remaining 1 bit is for CHO triggering. The position of the CHO triggering bit may be configured before, after, or in the middle of the bit(s) for (de)activation of the cell DTX/DRX configuration (i.e., between a bit for (de)activation of the cell DTX configuration and a bit for (de)activation of the cell DRX configuration), which may be defined/agreed upon in the standard or preconfigured by the BS.

In another method, in some implementations of the present disclosure, a CHO triggering bit configuration (i.e., the presence of a CHO triggering bit) may be configured by a separate RRC parameter. When the CHO triggering bit configuration is configured by a separate RRC parameter, it may implicitly indicate that the CHO triggering bit is added to an information block indicated by *position-inDCI-NES* (for a PCell). That is, when a configuration indicating the presence or absence of the CHO triggering bit is provided by a separate RRC parameter instead of the RRC parameter indicating the position of the CHO triggering bit or the RRC parameter indicating the bit width, the UE may implicitly know that the CHO triggering bit is included in the information block corresponding to the PCell in addition to the cell DTX/DRX activation (deactivation) bit(s). For example, when only cell DTX is configured for the PCell of a specific UE and the RRC parameter for a CHO triggering bit configuration is configured (for the UE), the UE may implicitly know that a corresponding information block includes 2 bits, one of the 2 bits is for (de)activation of cell DTX, and the remaining 1 bit is for CHO triggering. In another example, when both cell DTX and cell DRX are configured for the PCell of a UE and the RRC parameter for a CHO triggering bit configuration is configured (for the UE), the UE may implicitly know that a corresponding information block includes 3 bits, two of the 3 bits are for (de)activation of cell DTX, and the remaining 1 bit is for CHO triggering. The position of the CHO triggering bit may be configured before, after, or in the middle of the bit(s) for (de)activation of the cell DTX/DRX configuration (i.e., between a bit for (de)activation of the cell DTX configuration and a bit for (de)activation of the cell DRX configuration), which may be defined/agreed upon in the standard or preconfigured for the UE(s) by the BS. For example, referring to Block 1 in FIG. 10, when a cell DTX/DRX configuration is provided for the PCell of UE #1 and an RRC parameter related to a CHO triggering bit is configured (or an RRC parameter indicating the presence of the CHO triggering bit is configured), UE #1 may read 2 bits if only cell DTX or cell DRX is configured or 3 bits if both cell DTX and cell DRX are configured, starting from the starting bit position of an information block (Block 1 in the example of FIG. 10) for a corresponding serving cell (i.e., its PCell), activate or deactivate the cell DTX/DRX configuration based on the first 1 or 2 bits, and determine whether to execute the CHO procedure based on the last 1 bit. For example, when the last 1 bit of the information block for the PCell of UE #1 has a first value (e.g., '0'), UE #1 does not execute the CHO procedure (e.g., does not start evaluating whether candidate cell(s) for CHO satisfy a CHO execution condition), and when the last 1 bit has a second value (e.g., '1'), UE #1 may execute the CHO procedure (e.g., start evaluating whether the candidate cell(s) for CHO satisfy the CHO execution condition). In another example, referring to Block 2 in FIG. 10, when a cell DTX/DRX configuration is provided for the PCell of UE #2 and an RRC parameter related to a CHO triggering bit is configured (or an RRC parameter indicating the presence of the CHO triggering bit is configured) (for UE#2), UE #2 may read 2 bits if only cell DTX or cell DRX is configured or 3 bits if both cell DTX and cell DRX are configured, starting from the starting bit position of an information block (Block 2 in the example of FIG. 10) for its PCell, activate or deactivate the cell DTX/DRX configuration based on the first 1 or 2 bits, and determine whether to execute the CHO procedure based on the last 1 bit. For example, when the last 1 bit of the information block for the PCell of UE #2 has a first value (e.g., '0'), UE #1 may not execute the CHO procedure (e.g., does not start evaluating whether candidate cell(s) for CHO satisfy the CHO execution condition), and when the last 1 bit has a second value (e.g., '1'), UE #1 may execute the CHO procedure (e.g., start evaluating whether the candidate cell(s) for CHO satisfy the CHO execution condition). However, in the example of FIG. 10, since Block 2 is an information block for SCell #2, not the PCell, for UE #1, UE #1 may read 1 bit if only cell DTX or cell DRX is configured or 2 bits if both cell DTX and cell DRX are configured, starting from a starting bit position configured for SCell #2, and activate or deactivate the cell DTX/DRX configuration based on corresponding bit value(s). In another example, in some implementations, when there is a cell DTX/DRX configuration for the PCell of a UE but an RRC parameter related to a CHO triggering bit is absent, or when an RRC parameter indicating the absence of a CHO triggering bit is configured, the UE (e.g., refer to UE #K in FIG. 10) may determine that an information block for its PCell does not include the CHO triggering bit, and determine the activation or deactivation of the cell DTX/DRX configuration for the PCell based on 1 or 2 bits of the information block for the PCell.

In the case of a UE configured with a plurality of serving cells, Cell #1 may be a PCell for UE #A but an SCell for another UE #B, and conversely, Cell #2 may be a PCell for UE #B but an SCell for UE #A. Information blocks corresponding to a plurality of serving cells are configured in DCI format 2_9, and an information block corresponding to a PCell may differ for each UE. In some implementations of the present disclosure, when a UE is capable of reading not only a CHO triggering bit configured for a PCell but also a CHO triggering bit configured for an SCell, it may perform SCell activation/deactivation (e.g., stop transmission and/or reception of signals/channels on the SCell and stop transmission and/or reception of signals/channels related to the SCell) through a CHO triggering bit indication for the SCell even without a separate MAC control element (CE) indication. For example, even if the SCell of UE #A is turned off, UE #A may deactivate the SCell without triggering the CHO procedure. That is, based on DCI with a CHO triggering bit indicating SCell OFF for UE #A, UE #A may deactivate an SCell, and UE #B may trigger a PCell change, that is, the CHO procedure. In this case, since a separate SCell deactivation MAC CE indication is not required, signaling overhead may be reduced. Since DCI-based SCell (de)activation has no HARQ-ACK (i.e., an HARQ-ACK feedback specified for DCI-based SCell (de)activation), an HARQ-ACK feedback such as NACK-only may be introduced to resolve potential reliability issues (e.g., misalignment regarding SCell (de)activation between the BS and the UE).

In Method #1 described above, some implementations of the present disclosure for configuring a method for adding a CHO triggering bit to DCI format 2_9 and configuring its position have been described. However, some implementations of the present disclosure are not limited to the CHO triggering bit, and the same method is applicable when adding a bit or field for a specific purpose and configuring its position in DCI format 2_9. Additionally, when a CHO triggering bit is added to an information block corresponding to a cell (e.g., SCell) other than a PCell, the above-described implementations of the present disclosure are also applicable.

According to some implementations of the present disclosure, when a BS intends to apply the NES mode to a cell, for example, when the BS intends to turn off the cell, the BS may enable UE(s) using the cell as a PCell to perform signal transmission/reception seamlessly through another cell by triggering a CHO procedure for the UE(s) using the cell as a PCell through a DCI format used to activate or deactivate a cell DTX and/or DTX configuration of serving cell(s) for the UE(s).

According to some implementations of the present disclosure, when a specific bit for the PCell of a UE in DCI format 2_9 has a value indicating that the CHO procedure is triggered, the UE performs the CHO procedure. Therefore, the UE does not need to continuously evaluate a CHO execution condition for candidate cell(s) for CHO. Therefore, according to some implementations of the present disclosure, the power consumption of the UE may be reduced.

According to some implementations of the present disclosure, since a CHO triggering bit may be provided simultaneously to a plurality of UEs using, as a PCell, a cell to which the NES mode is to be applied, signaling overhead related to triggering the CHO procedure may be reduced.

According to some implementations of the present disclosure, energy of the BS and/or the UE may be saved.

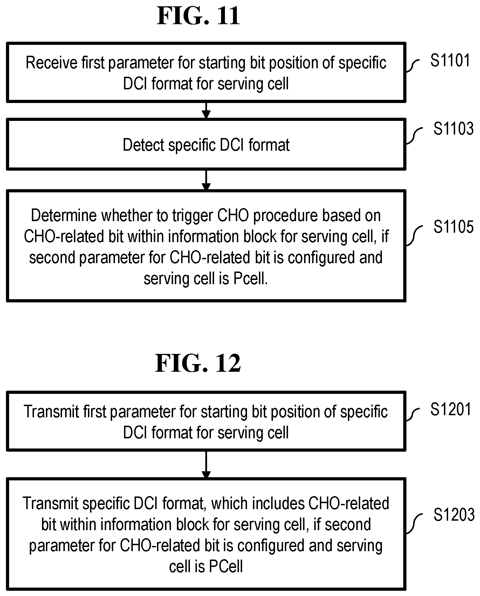

FIG. 11 is a flowchart illustrating a UE operation according to some implementations of the present disclosure.

The UE may perform operations according to some implementations of the present disclosure in association. The UE may include at least one transceiver; at least one processor; and at least one computer memory operably connectable to the at least one processor and storing instructions that, when executed, cause the at least one processor to perform operations according to some implementations of the present disclosure. A processing device for a UE may include at least one processor; and at least one computer memory operably connectable to the at least one processor and storing instructions that, when executed, cause the at least one processor to perform operations according to some implementations of the present disclosure. A computer readable (non-transitory or non-volatile) storage medium may store at least one computer program including instructions that, when executed by at least one processor, cause the at least one processor to perform operations according to some implementations of the present disclosure. A computer program or a computer program product may include instructions recorded in at least one computer readable (non-transitory or non-volatile) storage medium and causing, when executed, (at least one processor) to perform operations according to some implementations of the present disclosure.

In the method performed by the UE or the operations in the UE, the processing device, the (non-transitory) computer-readable storage medium, and/or the computer program product may include: receiving a first parameter for a starting bit position of a specific DCI format for a serving cell (S1101); detecting the specific DCI format (S1103); and based on i) a second parameter for a CHO-related bit being configured and ii) the serving cell being a primary cell (PCell) of the UE, determining whether to trigger a CHO procedure including evaluating a CHO condition based on a CHO-related field within an information block for the serving cell in the specific DCI format (S1105).

In some implementations, based on i) the second parameter being configured and ii) the serving cell being the PCell of the UE, the CHO-related field may be a last 1 bit of the information block.

In some implementations, based on i) the second parameter being configured, ii) the serving cell being the PCell of the UE, and ii) both cell DTX and cell DRX being configured for the serving cell, the information block may include 3 bits, and first 2 bits of the information block may be used for activation or deactivation of at least one of the cell DTX or the cell DRX.

In some implementations, based on i) the second parameter being configured, ii) the serving cell being the PCell of the UE, and ii) cell DTX or cell DRX being configured for the serving cell, the information block may include 2 bits, and a first bit of the information block may be used for activation or deactivation of the cell DTX or the cell DRX configured for the serving cell.

In some implementations, the specific DCI format may be DCI format 2_9.

In some implementations, the method or the operations may include monitoring the specific DCI format in a common search space.

In some implementations, the method or the operations may include, based on the CHO-related field including a first value and the CHO condition being satisfied, executing handover to another cell.

In some implementations, based on the CHO-related field including a second value, the CHO procedure may not be triggered.

In some implementations, the method or the operations may include, based on i) the second parameter not being configured or ii) the serving cell being a secondary cell of the UE, not obtaining the CHO-related field from the information block.

In some implementations, the method or the operations may include, based on i) the second parameter not being configured or ii) the serving cell being a secondary cell of the UE, considering that the information block does not include the CHO-related field.

In some implementations, the method or the operations may further include receiving a configuration for the CHO condition.

FIG. 12 is a flowchart illustrating a BS operation according to some implementations of the present disclosure.

The BS may perform operations according to some implementations of the present disclosure. The BS may include at least one transceiver; at least one processor; and at least one computer memory operably connectable to the at least one processor and storing instructions that, when executed, cause the at least one processor to perform operations according to some implementations of the present disclosure. A processing device for a BS may include at least one processor; and at least one computer memory operably connectable to the at least one processor and storing instructions that, when executed, cause the at least one processor to perform operations according to some implementations of the present disclosure. A computer readable (non-volatile or non-transitory) storage medium may store at least one computer program including instructions that, when executed by at least one processor, cause the at least one processor to perform operations according to some implementations of the present disclosure. A computer program or a computer program product may include instructions recorded in at least one computer readable (non-volatile or non-transitory) storage medium and causing, when executed, (at least one processor) to perform operations according to some implementations of the present disclosure.

In the method performed by the BS or the operations in the BS, the processing device, the (non-transitory) computer-readable storage medium, and/or the computer program product may include: transmitting a first parameter for a starting bit position of a specific DCI format for a serving cell of a UE (S1201); and transmitting the specific DCI format (S1203). Based on i) a second parameter for a CHO-related bit being configured and ii) the serving cell being a primary cell (PCell) of the UE, an information block for the serving cell in the specific DCI format may include a CHO-related field.

In some implementations, based on i) the second parameter being configured and ii) the serving cell being the PCell of the UE, the CHO-related field may be a last 1 bit of the information block.

In some implementations, based on i) the second parameter being configured, ii) the serving cell being the PCell of the UE, and ii) both cell DTX and cell DRX being configured for the serving cell, the information block may include 3 bits, and first 2 bits of the information block may be used for activation or deactivation of at least one of the cell DTX or the cell DRX.

In some implementations, based on i) the second parameter being configured, ii) the serving cell being the PCell of the UE, and ii) cell DTX or cell DRX being configured for the serving cell, the information block may include 2 bits, and a first bit of the information block may be used for activation or deactivation of the cell DTX or the cell DRX configured for the serving cell.

In some implementations, the specific DCI format may be DCI format 2_9.

In some implementations, the specific DCI format may be transmitted in a common search space.

In some implementations, based on i) the second parameter not being configured or ii) the serving cell being a secondary cell of the UE, the information block may not include the CHO-related field.

In some implementations, the method or the operations may further include transmitting a configuration for the CHO condition.

The examples of the present disclosure as described above have been presented to enable any person of ordinary skill in the art to implement and practice the present disclosure. Although the present disclosure has been described with reference to the examples, those skilled in the art may make various modifications and variations in the example of the present disclosure. Thus, the present disclosure is not intended to be limited to the examples set for the herein, but is to be accorded the broadest scope consistent with the principles and features disclosed herein.

The implementations of the present disclosure may be used in a BS, a UE, or other equipment in a wireless communication system.

## Claims

1. A method performed by a user equipment (UE), comprising:
receiving a first parameter for a starting bit position of a specific downlink control information (DCI) format for a serving cell;
detecting the specific DCI format; and
based on i) a second parameter for a conditional handover (CHO)-related bit being configured and ii) the serving cell being a primary cell (PCell) of the UE,
obtaining a CHO-related field from an information block for the serving cell within the specific DCI format, and
determining whether to trigger a CHO procedure including evaluating a CHO condition, based on the CHO-related field.

2. The method of claim 1, wherein, based on i) the second parameter being configured and ii) the serving cell being the PCell of the UE, the CHO-related field is a last 1 bit of the information block.

3. The method of claim 2, wherein, based on i) the second parameter being configured, ii) the serving cell being the PCell of the UE, and ii) cell discontinuous transmission (DTX) and cell discontinuous reception (DRX) being configured for the serving cell, the information block includes 3 bits, and first 2 bits of the information block are used for activation or deactivation of at least one of the cell DTX or the cell DRX.

4. The method of claim 2, wherein, based on i) the second parameter being configured, ii) the serving cell being the PCell of the UE, and ii) cell discontinuous transmission (DTX) or cell discontinuous reception (DRX) being configured for the serving cell, the information block includes 2 bits, and a first bit of the information block is used for activation or deactivation of the cell DTX or the cell DRX configured for the serving cell.

5. The method of claim 1, wherein the specific DCI format is DCI format 2_9.

6. The method of claim 1, comprising:
monitoring the specific DCI format in a common search space.

7. The method of claim 1, comprising:
based on the CHO-related field including a first value and the CHO condition being satisfied, executing handover to another cell.

8. The method of claim 1, wherein, based on the CHO-related field including a second value, the CHO procedure is not triggered.

9. The method of claim 1, wherein, based on i) the second parameter not being configured or ii) the serving cell being a secondary cell of the UE, the UE does not obtain the CHO-related field from the information block.

10. The method of claim 1, wherein, based on i) the second parameter not being configured or ii) the serving cell being a secondary cell of the UE, the UE considers that the information block does not include the CHO-related field.

11. An apparatus comprising:
at least one processor; and
at least one computer memory operably connectable to the at least one processor and storing instructions that, when executed, cause the at least one processor to perform operations for a user equipment (UE), the operations comprising:
receiving a first parameter for a starting bit position of a specific downlink control information (DCI) format for a serving cell;
detecting the specific DCI format; and
based on i) a second parameter for a conditional handover (CHO)-related bit being configured and ii) the serving cell being a primary cell (PCell) of the UE,
obtaining a CHO-related field from an information block for the serving cell within the specific DCI format, and
determining whether to trigger a CHO procedure including evaluating a CHO condition, based on the CHO-related field.

12. A non-transitory computer-readable storage medium storing at least one program code including instructions that, when executed, cause at least one processor to perform operations for a user equipment (UE), the operations comprising:
receiving a first parameter for a starting bit position of a specific downlink control information (DCI) format for a serving cell;
detecting the specific DCI format; and
based on i) a second parameter for a conditional handover (CHO)-related bit being configured and ii) the serving cell being a primary cell (PCell) of the UE,
obtaining a CHO-related field from an information block for the serving cell within the specific DCI format, and
determining whether to trigger a CHO procedure including evaluating a CHO condition, based on the CHO-related field.

13. A method performed by a base station (BS), comprising:
transmitting a first parameter for a starting bit position of a specific downlink control information (DCI) format for a serving cell of a user equipment (UE); and
transmitting the specific DCI format,
wherein, based on i) a second parameter for a conditional handover (CHO)-related bit being configured and ii) the serving cell being a primary cell (PCell) of the UE, an information block for the serving cell within the specific DCI format includes a CHO-related field.

14. A base station (BS) comprising:
at least one transceiver;
at least one processor; and
at least one computer memory operably connectable to the at least one processor and storing instructions that, when executed, cause the at least one processor to perform operations for the BS, the operations comprising:
transmitting a first parameter for a starting bit position of a specific downlink control information (DCI) format for a serving cell of a user equipment (UE); and
transmitting the specific DCI format, and
wherein, based on i) a second parameter for a conditional handover (CHO)-related bit being configured and ii) the serving cell being a primary cell (PCell) of the UE, an information block for the serving cell within the specific DCI format includes a CHO-related field.

15. The BS of claim 14, wherein, based on i) the second parameter being configured and ii) the serving cell being the PCell of the UE, the CHO-related field is a last 1 bit of the information block.

16. The BS of claim 15, wherein, based on i) the second parameter being configured, ii) the serving cell being the PCell of the UE, and ii) both cell discontinuous transmission (DTX) and cell discontinuous reception (DRX) being configured for the serving cell, the information block includes 3 bits, and first 2 bits of the information block are used for activation or deactivation of at least one of the cell DTX or the cell DRX.

17. The BS of claim 15, wherein, based on i) the second parameter being configured, ii) the serving cell being the PCell of the UE, and ii) cell discontinuous transmission (DTX) or cell discontinuous reception (DRX) being configured for the serving cell, the information block includes 2 bits, and a first bit of the information block is used for activation or deactivation of the cell DTX or the cell DRX configured for the serving cell.

18. The BS of claim 14, wherein the specific DCI format is DCI format 2_9.

19. The BS of claim 14, wherein the specific DCI format is transmitted in a common search space.

20. The BS of claim 14, wherein, based on i) the second parameter not being configured or ii) the serving cell not being a PCell for any UE, the information block does not include the CHO-related field.
